(19) Europäisches Patentamt
European Patent Office
Office européen des brevets

(11) **EP 4 421 526 A1**

(12) **EUROPEAN PATENT APPLICATION**
published in accordance with Art. 153(4) EPC

(43) Date of publication:
**28.08.2024 Bulletin 2024/35**

(21) Application number: **22896175.1**

(22) Date of filing: **22.11.2022**

(51) International Patent Classification (IPC):
**G01S 13/76** (2006.01)     **G01S 13/02** (2006.01)
**G01S 7/40** (2006.01)

(52) Cooperative Patent Classification (CPC):
**G01S 7/40; G01S 13/02; G01S 13/76**

(86) International application number:
**PCT/KR2022/018492**

(87) International publication number:
**WO 2023/090978 (25.05.2023 Gazette 2023/21)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **22.11.2021 KR 20210161581**

(71) Applicant: Samsung Electronics Co., Ltd.
Suwon-si, Gyeonggi-do 16677 (KR)

(72) Inventors:
• OH, Hyunseob
  Suwon-si Gyeonggi-do 16677 (KR)
• KOO, Jonghoe
  Suwon-si Gyeonggi-do 16677 (KR)
• SEO, Jinwook
  Suwon-si Gyeonggi-do 16677 (KR)
• AN, Kisoo
  Suwon-si Gyeonggi-do 16677 (KR)

(74) Representative: **Nederlandsch Octrooibureau**
**P.O. Box 29720**
**2502 LS The Hague (NL)**

(54) **METHOD AND DEVICE FOR ULTRA-WIDE BAND COMMUNICATION**

(57)     The present disclosure relates to a method for dynamically controlling ranging power. An electronic device method using ultra-wide band (UWB) communication, according to various embodiments of the present disclosure, comprises the steps of: transmitting an initiation message for initiating UWB ranging; and identifying whether a response message corresponding to the initiation message has been received from another electronic device. The initiation message includes ranging power control request information for dynamic power control with respect to the UWB ranging, and the response message can include ranging power control response information corresponding to the ranging power control request information.

FIG. 10

**Description**

[Technical Field]

The disclosure relates to ultra-wide band (UWB) communication and, more specifically, to a method and device for dynamically controlling ranging power.

[Background Art]

The Internet is evolving from the human-centered connection network by which humans create and consume information to the Internet of Things (IoT) network by which information is communicated and processed between things or other distributed components. Another arising technology is the Internet of Everything (IoE), which is a combination of the Big data processing technology and the IoT technology through, e.g., a connection with a cloud server. Implementing the IoT requires technical elements, such as sensing technology, a wired/wireless communication and network infrastructure, service interface and security technologies. A recent ongoing research for thing-to-thing connection is on techniques for sensor networking, machine-to-machine (M2M), or machine-type communication (MTC).

In the IoT environment may be offered intelligent Internet Technology (IT) services that collect and analyze the data generated by the things connected with one another to create human life a new value. The IoT may have various applications, such as the smart home, smart building, smart city, smart car or connected car, smart grid, health-care, or smart appliance industry, or state-of-art medical services, through conversion or integration of conventional information technology (IT) techniques and various industries.

As wireless communication systems evolve to provide various services, a need arises for a method for effectively providing such services. For example, it is possible to use a ranging technique for measuring the distance between electronic devices using ultra-wide band (UWB). UWB is a wireless communication technology that uses a very wide frequency band of several GHz or more in a baseband without using a wireless carrier.

[Detailed Description of the Invention]

[Technical Problem]

The disclosure provides a UWB message, method, and device for dynamically controlling ranging power.

[Technical Solution]

According to an aspect of the disclosure, a method by a first electronic device using UWB communication may comprise transmitting an initiation message for initiating UWB ranging and identifying whether a response message corresponding to the initiation message is received from a second electronic device. The initiation message may include ranging power control request information for dynamic power control for the UWB ranging, and the response message may include ranging power control response information corresponding to the ranging power control request information.

According to another aspect of the disclosure, a method by a second UWB device may comprise receiving an initiation message for initiating UWB ranging from a first UWB device, the initiation message including ranging power control request information for dynamic power control for the UWB ranging, determining transmission power based on the ranging power control request information included in the initiation message, and transmitting, to the first electronic device, a response message corresponding to the initiation message using the determined transmission power. The response message may include ranging power control response information corresponding to the ranging power control request information.

According to another aspect of the disclosure, a first UWB device using UWB communication may comprise a transceiver and at least one processor. The at least one processor may be configured to transmit an initiation message for initiating UWB ranging and identify whether a response message corresponding to the initiation message is received from a second electronic device. The initiation message may include ranging power control request information for dynamic power control for the UWB ranging, and the response message may include ranging power control response information corresponding to the ranging power control request information.

According to another aspect of the disclosure, a second UWB device using UWB communication may comprise a transceiver and at least one processor. The at least one processor may be configured to receive an initiation message for initiating UWB ranging from a first UWB device, the initiation message including ranging power control request information for dynamic power control for the UWB ranging, determine transmission power based on the ranging power control request information included in the initiation message, and transmit, to the first electronic device, a response message corresponding to the initiation message using the determined transmission power. The response message may include ranging power control response information corresponding to the ranging power control request information.

It is possible to reduce power consumption while maintaining a predetermined level of reception rate or more by dynamically/adaptively controlling ranging power according to the context.

[Brief Description of the Drawings]

FIG. 1 illustrates an example architecture of a UWB device according to an embodiment of the disclosure;

FIG. 2 illustrates an example configuration of a framework of a UWB device according to an embodiment of the disclosure;

FIG. 3 illustrates a method for performing communication by a plurality of UWB devices according to an embodiment of the disclosure;

FIG. 4 illustrates a structure of a UWB MAC frame according to an embodiment of the disclosure;

FIGS. 5A and 5B illustrate a structure of a UWB PHY packet according to an embodiment of the disclosure;

FIG. 6 illustrates an example of a structure of a ranging block and round used for UWB ranging according to an embodiment of the disclosure;

FIGS. 7A and 7B illustrate an SS-TWR ranging procedure according to an embodiment of the disclosure;

FIGS. 8A and 8B illustrate a DS-TWR ranging procedure according to an embodiment of the disclosure;

FIG. 9A illustrates schematic operations of a DL-TDoA (OWR) procedure according to an embodiment of the disclosure;

FIG. 9B illustrates an example message exchange operation of a DL-TDoA procedure (OWR) according to an embodiment of the disclosure;

FIG. 10 illustrates a method for performing a dynamic power control operation by a plurality of electronic device 101s according to an embodiment of the disclosure;

FIG. 11A illustrates a method for performing a dynamic power control operation by a first electronic device according to a first embodiment of the disclosure;

FIG. 11B illustrates a method for performing a dynamic power control operation by a first electronic device according to a second embodiment of the disclosure;

FIG. 12 illustrates a method for performing a dynamic power control operation by a first electronic device according to a second embodiment of the disclosure;

FIGS. 13A and 13B illustrate a ranging power control-request (RPC-REQ) information element and a ranging power control-response (RPC-RESP) information element according to an embodiment of the disclosure;

FIGS. 14A and 14B illustrate an RPC-REQ information element and an RPC-RESP information element according to another embodiment of the disclosure;

FIGS. 15A and 15B illustrate an RPC-REQ information element and an RPC-RESP information element according to another embodiment of the disclosure;

FIGS. 16A and 16B illustrate a UWB message including RPC-related information according to an embodiment of the disclosure;

FIG. 17A illustrates a UWB message including RPC-related information according to another embodiment of FIG. 17A;

FIG. 17B illustrates a message control field included in the UWB message of FIG. 17A;

FIG. 18A illustrates a UWB message including RPC-related information according to another embodiment of the disclosure;

FIG. 18B illustrates a message control field included in the UWB message of FIG. 18A;

FIG. 19A illustrates a UWB message including RPC-related information according to another embodiment of FIG. 17A;

FIG. 19B illustrates a message control field included in the UWB message of FIG. 19A;

FIG. 20 is a flowchart illustrating a method by a first electronic device according to an embodiment of the disclosure;

FIG. 21 is a flowchart illustrating a method by a first electronic device according to an embodiment of the disclosure;

FIG. 22 is a block diagram illustrating a first electronic device according to an embodiment of the disclosure; and

FIG. 23 is a block diagram illustrating a second electronic device according to an embodiment of the disclosure.

[Mode for Carrying out the Invention]

Hereinafter, embodiments of the present invention are described in detail with reference to the accompanying drawings.

In describing embodiments, the description of technologies that are known in the art and are not directly related to the present invention is omitted. This is for further clarifying the gist of the present disclosure without making it unclear.

For the same reasons, some elements may be exaggerated or schematically shown. The size of each element does not necessarily reflects the real size of the element. The same reference numeral is used to refer to the same element throughout the drawings.

Advantages and features of the present disclosure, and methods for achieving the same may be understood through the embodiments to be described below taken in conjunction with the accompanying drawings. However, the present invention is not limited to the embodiments disclosed herein, and various changes may be made thereto. The embodiments disclosed herein are provided only to inform one of ordinary skilled in the art of the category of the present disclosure. The present invention is defined only by the appended claims. The same reference numeral denotes the same element throughout the specification.

It should be appreciated that the blocks in each flowchart and combinations of the flowcharts may be performed by computer program instructions. Since the computer program instructions may be equipped in a processor of a general-use computer, a special-use computer or other programmable data processing devices, the instructions executed through a processor of a computer or other programmable data processing devices generate means for performing the functions described in connection with a block(s) of each flowchart. Since the computer program instructions may be stored in a computer-available or computer-readable memory that may be oriented to a computer or other programmable data processing devices to implement a function in a specified manner, the instructions stored in the computer-available or computer-readable memory may produce a product including an instruction means for performing the functions described in connection with a block(s) in each flowchart. Since the computer program instructions may be equipped in a computer or other programmable data processing devices, instructions that generate a process executed by a computer as a series of operational steps are performed over the computer or other programmable data processing devices and operate the computer or other programmable data processing devices may provide steps for executing the functions described in connection with a block(s) in each flowchart.

Further, each block may represent a module, segment, or part of a code including one or more executable instructions for executing a specified logical function(s). Further, it should also be noted that in some replacement embodiments, the functions mentioned in the blocks may occur in different orders. For example, two blocks that are consecutively shown may be performed substantially simultaneously or in a reverse order depending on corresponding functions.

As used herein, the term "unit" means a software element or a hardware element such as a field-programmable gate array (FPGA) or an application specific integrated circuit (ASIC). A unit plays a certain role. However, 'unit' is not limited to software or hardware. A 'unit' may be configured in a storage medium that may be addressed or may be configured to execute one or more processors. Accordingly, as an example, a 'unit' includes elements, such as software elements, object-oriented software elements, class elements, and task elements, processes, functions, attributes, procedures, subroutines, segments of program codes, drivers, firmware, microcodes, circuits, data, databases, data architectures, tables, arrays, and variables. Functions provided within the components and the 'units' may be combined into smaller numbers of components and 'units' or further separated into additional components and 'units'. Further, the components and 'units' may be implemented to execute one or more CPUs in a device or secure multimedia card. According to embodiments of the disclosure, a "...unit" may include one or more processors.

As used herein, the term 'terminal' or 'device' may also be referred to as a mobile station (MS), user equipment (UE), user terminal (UT), terminal, wireless terminal, access terminal (AT), subscriber unit, subscriber station (SS), wireless device, wireless communication device, wireless transmit/receive unit (WTRU), mobile node, or mobile or may be referred to in other terms. Various embodiments of the terminal may include cellular phones, smart phones with wireless communication capabilities, personal digital assistants (PDAs) with wireless communication capabilities, wireless modems, portable computers with wireless communication capabilities, capturing/recording/shooting/filming devices, such as digital cameras, having wireless communication capabilities, game players with wireless communications capabilities, music storage and playback home appliances with wireless communications capabilities, Internet home appliances capable of wireless Internet access and browsing, or portable units or terminals incorporating combinations of those capabilities. Further, the terminal may include a machine to machine (M2M) terminal and a machine-type communication (MTC) terminal/device, but is not limited thereto. In the disclosure, the terminal may be referred to as an electronic device or simply as a device.

Hereinafter, the operational principle of the disclosure is described below with reference to the accompanying drawings. When determined to make the subject matter of the disclosure unnecessarily unclear, the detailed description of known functions or configurations may be skipped in describing embodiments of the disclosure. The terms as used herein are defined considering the functions in the present disclosure and may be replaced with other terms according to the intention or practice of the user or operator. Therefore, the terms should be defined based on the overall disclosure.

Hereinafter, embodiments of the present invention are described in detail with reference to the accompanying drawings. Further, although a communication system using UWB is described in connection with embodiments of the present invention, as an example, embodiments of the present invention may also apply to other communication systems with similar technical background or features. For example, a communication system using Bluetooth or ZigBee may be included therein. Further, embodiments of the present invention may be modified in such a range as not to significantly depart from the scope of the present invention under the determination by one of ordinary skill in the art and such modifications may be applicable to other communication systems.

When determined to make the subject matter of the present invention unclear, the detailed description of the known art or functions may be skipped. The terms as used herein are defined considering the functions in the present disclosure and may be replaced with other terms according to the intention or practice of the user or operator. Therefore, the terms should be defined based on the overall disclosure.

In general, wireless sensor network technology is largely divided into a wireless local area network (WLAN) technology and a wireless personal area network (WPAN) technology according to the recognition distance. In this case, WLAN is a technology based on IEEE 802.11 which enables access to the backbone network within a radius of about 100m. WPAN is a technology based on IEEE 802.15 which includes Bluetooth, ZigBee, and ultra-wide band (UWB). A wireless network in which such a wireless network technology is implemented may include a plurality of electronic devices.

UWB may refer to a short-range high-rate wireless communication technology using a wide frequency band of several GHz or more, low spectral density, and short pulse width (e.g., 1 nsec to 4 nsec) in a baseband state. UWB may mean a band itself to which UWB communication is applied. UWB may enable secure and accurate ranging between devices. Thus, UWB enables relative position estimation based on the distance between two devices or accurate position estimation of a device based on the distance from fixed devices (whose positions are known).

The terminology used herein is provided for a better understanding of the disclosure, and changes may be made thereto without departing from the technical spirit of the disclosure.

"Application dedicated file (ADF)" may be, e.g., a data structure in an application data structure that may host an application or application specific data.

"Application protocol data unit (APDU)" may be a command and a response used when communicating with the application data structure in the UWB device.

"Application specific data" may be, e.g., a file structure having a root level and an application level including UWB controlee information and UWB session data required for a UWB session.

"Controller" may be a ranging device that defines and controls ranging control messages (RCM) (or control messages).

"Controlee" may be a ranging device using a ranging parameter in the RCM (or control message) received from the controller.

Unlike "static STS," "dynamic scrambled timestamp sequence (STS) mode" may be an operation mode in which the STS is not repeated during a ranging session. In this mode, the STS may be managed by the ranging device, and the ranging session key that generates STS may be managed by a secure component.

"Applet" may be, e.g., an applet executed on the secure component including UWB parameters and service data. In this disclosure, Applet may be a FiRa Applet defined by FiRa.

"Ranging device" may be a device capable of performing UWB ranging. In the disclosure, the Ranging Device may be an Enhanced Ranging Device (ERDEV) defined in IEEE 802.15.4z or a FiRa Device defined by FiRa. The ranging device may be referred to as a UWB device.

"UWB-enabled Application" may be an application for UWB service. For example, the UWB-enabled Application may be an application using a Framework API for configuring an OOB Connector, a Secure Service, and/or a UWB service for a UWB session. In this disclosure, "UWB-enabled Application" may be abbreviated as an application or a UWB application. UWB-enabled Application may be a FiRa-enabled Application defined by FiRa.

"Framework" may be a component that provides access to Profiles, individual-UWB configuration and/or notifications. "Framework" may be, e.g., a collection of logical software components including Profile Manager, OOB Connector, Secure Service, and/or UWB service. In the disclosure, the Framework may be a FiRa Framework defined by FiRa.

"OOB Connector" may be a software component for establishing an out-of-band (OOB) connection (e.g., BLE connection) between Ranging Devices. In the disclosure, the OOB Connector may be a FiRa OOB Connector defined by FiRa.

"Profile" may be a previously defined set of UWB and OOB configuration parameters. In the disclosure, Profile may be a FiRa Profile defined by FiRa.

"Profile Manager" may be a software component that implements a profile available on the Ranging Device. In the disclosure, the Profile Manager may be a FiRa Profile Manager defined by FiRa.

"Service" may be an implementation of a use case that provides a service to an end-user.

"Smart Ranging Device" may be a ranging device that may implement an optional Framework API. In the disclosure, the Smart Ranging Device may be a FiRa Smart Device defined by FiRa.

"Global Dedicated File (GDF)" may be a root level of application specific data including data required to establish a USB session.

"Framework API" may be an API used by a UWB-enabled Application to communicate with the Framework.

"Initiator" may be a Ranging Device that initiates a ranging exchange.

"Object Identifier (OID)" may be an identifier of the ADF in the application data structure.

"Out-Of-Band (OOB)" may be data communication that does not use UWB as an underlying wireless technology.

"Ranging Data Set (RDS)" may be data (e.g., UWB session key, session ID, etc.) required to establish a UWB session when it is needed to protect confidentiality, authenticity and integrity.

"Responder" may be a ranging device that responds to the Initiator in a ranging exchange.

"STS" may be a ciphered sequence for increasing the integrity and accuracy of ranging measurement timestamps. The STS may be generated from the ranging session key.

"Secure channel" may be a data channel that prevents overhearing and tampering.

"Secure Component" may be an entity (e.g., SE or TEE) having a defined security level that interfaces with UWBS for the purpose of providing RDS to UWBS, e.g., when dynamic STS is used.

"Secure Element (SE)" may be a tamper-resistant secure hardware component that may be used as a Secure Component in the Ranging Device.

"Secure ranging" may be ranging based on STS generated through a strong encryption operation.

"Secure Service" may be a software component for interfacing with a Secure Component, such as a Secure Element or Trusted Execution Environment (TEE).

"Service Applet" may be an applet on a Secure Component that handles service specific transactions.

"Service Data" may be data defined by a service provider that needs to be transferred between two ranging devices to implement a service.

"Service Provider" may be an entity that defines and provides hardware and software required to provide a specific service to an end-user.

"Static STS mode" is an operation mode in which STS is repeated during a session, and does not need to be managed by the Secure Component.

"Secure UWB Service (SUS) Applet" may be an applet on the SE that communicates with the applet to retrieve data needed to enable secure UWB sessions with other ranging devices. The SUS Applet may transfer corresponding data (information) to the UWBS.

"UWB Service" may be a software component that provides access to the UWBS.

"UWB Session" may be a period from when the controller and the controlee start communication through UWB until the communication stops. A UWB Session may include ranging, data transfer, or both ranging and data transfer.

"UWB Session ID" may be an ID (e.g., a 32-bit integer) that identifies the UWB Session, shared between the controller and the controller.

"UWB session key" may be a key used to protect the UWB Session. The UWB Session Key may be used to generate the STS. In this disclosure, the UWB session key may be a UWB ranging session key (URSK), and may be abbreviated as a session key.

"UWB subsystem (UWBS)" may be a hardware component implementing the UWB PHY and MAC layers specifications. UWBS may have an interface to Framework and an interface to Secure Component to search for RDS. In this disclosure, the UWB PHY and MAC specifications may be, e.g., FiRa PHY and FiRa MAC specifications defined by FiRa referring to IEEE 802.15.4/4z.

"Downlink time difference of arrival (DL-TDoA)-anchor" may be a UWB device (e.g., a FiRa device) that exchanges a DT message (downlink TDoA message (DTM) with another DT-anchor. For example, the DT-anchor may be a UWB device installed by a service provider on a wall, ceiling, structure, or the like in a room to provide an indoor positioning service. As an embodiment, the DT-anchor may be of two types: an initiator DT-anchor and a responder DT-anchor. In this disclosure, the DT-anchor may be referred to as an anchor device, a UWB anchor, or a UWB anchor device.

"Initiator DT-anchor" may be a DT-anchor that transmits a poll DTM to the responder DT-anchor. As an embodiment, the initiator DT-anchor may initiate a ranging round for DL-TDoA (DL-TDoA ranging round). In this disclosure, the initiator DT-anchor may be referred to as an initiator anchor, an initiator anchor device, an initiator UWB anchor, or an initiator UWB anchor device.

As an embodiment, the initiator DT-anchor may schedule a ranging slot for the responder DT-anchors operating in the same ranging round to respond. For example, the initiator DT-anchor may schedule the transmission times of the associated responder DT-anchors (e.g., responder DT-anchors in the same cluster). As an embodiment, the poll DTM of the initiator DT-anchor may include the transmission timestamp of the poll DTM. In the disclosure, the poll DTM may be referred to as a poll message, an initiation message, or an initiator DTM.

As an embodiment, the initiator DT-anchor may further transfer a final DTM after receiving the responses of the responder DT-anchors. For example, the initiator DT-anchor may additionally transmit a final DTM after all the responder DT-anchors in the same cluster transmit the response DTM in the DL-TDoA ranging round. As an embodiment, the final DTM may include a reply time for the message sent by the responder DT-anchors and/or the transmission timestamp of the final DTM. In this disclosure, the Final DTM may be referred to as a final message.

"Responder DT-anchor" may be a DT-anchor that responds to the poll DTM to the initiator DT-anchor. As an embodiment, the response DTM to which the responder DT-anchor responds may include the reply time for the poll DTM and/or the transmission timestamp of the response message. As an embodiment, the ranging slot for the response DTM may be scheduled by the initiator DT-anchor, or may be preset. In the disclosure, the responder DT-anchor may be referred to as a responder anchor, a responder anchor device, a responder UWB anchor, or a responder UWB anchor device. In the disclosure, the responder DTM may be referred to as a response message, a responder message, or a response DTM.

"DT-tag" may be a UWB device (e.g., FiRa device) that may estimate its location (e.g., coordinates) using the TDoA measurement based on the DTM exchanged between DT-anchors. In the disclosure, the DT-tag may be referred to as a tag, a tag device, a UWB tag, or a UWB tag device.

"DL-TDoA (DT)" may be a localization method using TDoA measurement from a plurality of DT-anchors. As an embodiment, the DT-anchors may exchange DT messages (DTMs) with each other, and the DT-tag may passively receive the DTM. As an embodiment, each DT-tag receiving DTMs may calculate the TDoA using at least one of the reception timestamp of each DTM, the transmission timestamp of DTMs included in the corresponding DTMs, or the reply time included in the DTMs. As an embodiment, the DT-tag may estimate its location based on at least one of the calculated coordinates of TDoA and DT-anchors.

"Cluster" may be a set of DT-anchors that transmit and receive the DTM, such that the DT-tag may estimate its location. The cluster may include one initiator DT-anchor and one or more responder DT-anchors. As an embodiment, the cluster may include a different number of responder DT-anchors depending on the positioning scheme (e.g., 2D positioning, 3D positioning). The cluster area may be a space formed by the DT anchors constituting the cluster. As an embodiment, a plurality of clusters may be deployed in a wide range of service area. The area covered by one cluster may overlap the area covered by an adjacent cluster. In this disclosure, a cluster may be referred to as a cell.

"UWB message" may be a message including a payload IE transmitted by the UWB device (e.g., ERDEV).

The "ranging message" may be a message transmitted by a UWB device (e.g., ERDEV) in a UWB ranging procedure. For example, the ranging message may be a message, such as a ranging initiation message (RIM), a ranging response message (RRM), a ranging final message (RFM), or a measurement report message (MRM), transmitted by a UWB device (e.g., ERDEV) in a specific phase of the ranging round. A ranging message may include one or more UWB messages. If necessary, a plurality of ranging messages may be merged into one message. For example, in the case of non-deferred DS-TWR ranging, RFM and MRM may be merged into one message in a ranging final phase.

When determined to make the subject matter of the present invention unnecessarily unclear, the detailed description of related known functions or features may be skipped in describing the disclosure.

Hereinafter, various embodiments of the disclosure are described with reference to the accompanying drawings.

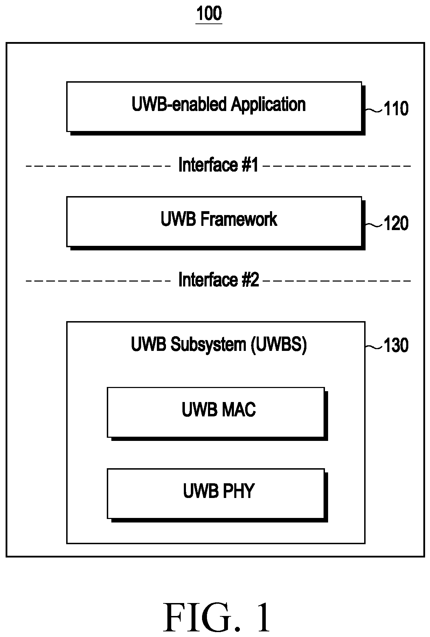

FIG. 1 illustrates an example architecture of a UWB device according to an embodiment of the disclosure;

In the disclosure, the UWB device 100 may be an electronic device supporting UWB communication. The UWB device 100 may be, e.g., a ranging device supporting UWB ranging. In an embodiment, the Ranging Device may be an Enhanced Ranging Device (ERDEV) defined in IEEE 802.15.4z or a FiRa Device defined by FiRa.

In the embodiment of FIG. 1, the UWB device 100 may interact with other UWB devices through a UWB session.

The UWB device 100 may implement a first interface (Interface #1) that is an interface between the UWB-enabled Application 110 and the Framework 120, and the first interface allows the UWB-enabled application 110 on the UWB device 100 to use the UWB capabilities of the UWB device 100 in a predetermined manner. In an embodiment, the first interface may be a Framework API or a proprietary interface, but is not limited thereto.

The UWB device 100 may implement a second interface (Interface #2) that is an interface between the UWB Framework 110 and the UWB subsystem (UWBS, 130). In an embodiment, the second interface may be a UWB Command Interface (UCI) or proprietary interface, but is not limited thereto.

Referring to FIG. 1, the UWB device 100 may include a UWB-enabled Application 110, a Framework (UWB Framework) 120, and/or a UWBS 130 including a UWB MAC Layer and a UWB Physical Layer. Depending on the embodiment, some entities may not be included in the UWB device, or additional entities (e.g., security layer) may be further included.

The UWB-enabled Application 110 may trigger establishment of a UWB session by a UWBS 130 through the first interface. The UWB-enabled Application 110 may use one of previously defined profiles (profile). For example, the UWB-enabled Application 110 may use one of the profiles defined in FiRa or a custom profile. The UWB-enabled Application 110 may use the first interface to handle related events, such as service discovery, ranging notifications, and/or error conditions.

The Framework 120 may provide access to Profiles, individual-UWB configuration and/or notifications. The Framework 120 may support at least one of a function for UWB ranging and transaction execution, a function to provide an interface to the application and UWBS 130, or a function to estimate the location of the device 100. The Framework 120 may be a set of software components. As described above, the UWB-enabled Application 110 may interface with the Framework 120 through the first interface, and the Framework 120 may interface with the UWBS 130 through the second interface.

Meanwhile, in the disclosure, the UWB-enabled Application 110 and/or Framework 120 may be implemented by an application processor (AP) (or processor). Accordingly, in the disclosure, the operation of the UWB-enabled Application 110 and/or the Framework 120 may be understood as performed by an AP (or a processor). In this disclosure, the framework may be referred to as an AP or a processor.

The UWBS 130 may be a hardware component including a UWB MAC Layer and a UWB Physical Layer. The UWBS 130 may perform UWB session management and may communicate with the UWBS of another UWB device. The UWBS 130 may interface with the Framework 120 through the second interface and may obtain the secure data from the Secure Component. In an embodiment, the Framework (or application processor) 120 may transmit a command to the UWBS 130 through UCI, and the UWBS 130 may transmit a response to the command to the Framework 120. The UWBS 130 may transfer a notification to the Framework 120 through the UCI.

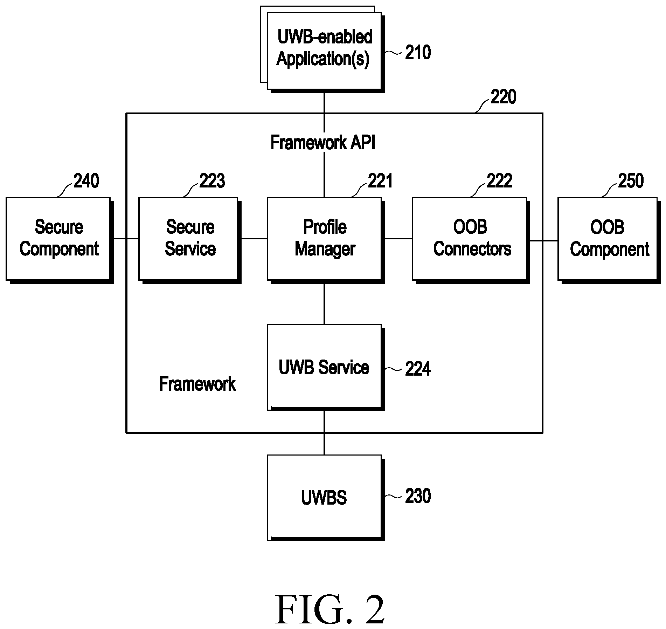

FIG. 2 illustrates an example configuration of a framework of a UWB device according to an embodiment of the disclosure;

The UWB device of FIG. 2 may be an example of the UWB device of FIG. 1.

Referring to FIG. 2, the Framework 220 may include, e.g., software components, such as Profile Manager 221, OOB Connector(s) 222, Secure Service 223 and/or UWB service 224.

The Profile Manager 221 may serve to manage profiles available on the UWB device. Profile may be a set of parameters required to establish communication between UWB devices. For example, a profile may include a parameter indicating which OOB secure channel is used, a UWB/OOB configuration parameter, a parameter indicating whether the use of a particular secure component is mandatory, and/or a parameter related to the file structure of the ADF. The UWB-enabled Application 210 may communicate with the Profile Manager 221 through the first interface (e.g., Framework (API)).

The OOB Connector 222 may serve to establish an OOB connection with another device. The OOB Connector 222 may handle an OOB step including a discovery step and/or a connection step. The OOB component (e.g., BLE component) 250 may be connected to the OOB connector 222.

The Secure Service 223 may play a role of interfacing with a Secure Component 240, such as SE or TEE.

The UWB Service 224 may perform a role of managing the UWBS 230. The UWB Service 224 may provide access to the UWBS 230 from the Profile Manager 221 by implementing the second interface.

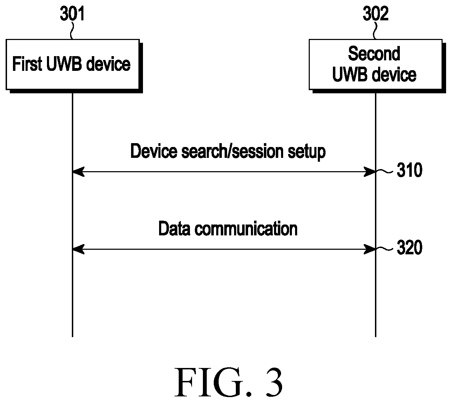

FIG. 3 illustrates a method for performing communication by a plurality of UWB devices according to an embodiment of the disclosure.

The first UWB device 301 and the second UWB device 302 of FIG. 3 may be, e.g., the UWB devices of FIG. 1 or 2.

Referring to FIG. 3, the first UWB device 301 and the second UWB device 302 may perform a device search/session setup procedure 310 and a data communication procedure 320. The device search/session setup procedure 310 and data communication procedure 320 may be managed or controlled by the MAC layer (entity) of the electronic device.

(1) Device search/session setup procedure

In the disclosure, the device search/session setup procedure 310 may be a prior procedure performed before the data communication procedure 320. As an example, the device discovery/session setup procedure 310 may be performed over OOB communication (channel), narrow band (NB) communication (channel) or UWB communication (channel).

The device search/session setup procedure 310 may include at least one of the following operations.

- An operation (discovery operation) in which the UWB device searches for (discovers) another UWB devices
- An operation (session setup operation) in which the UWB device sets up and controls a UWB session

As an embodiment, the session setup operation may include an operation for setting up a secure channel for securing messages and data and/or an operation for exchanging parameters for setting up a UWB session (e.g., a UWB capability parameter (controlee capability parameter), UWB configuration parameter, and a session key-related parameter) through the secure channel.

(2) Data communication procedure

In the disclosure, the data communication procedure 320 may be a procedure for transmitting and receiving data using UWB communication. As an embodiment, in the data communication procedure 320, the UWB device may transmit/receive data through the UWB session established through the device search/session setup procedure 310.

The data communication procedure 320 may include at least one of the following operations.

- An operation in which a UWB device performs UWB ranging with another UWB device (UWB ranging operation)

- An operation in which a UWB device exchanges service data with another UWB device (transaction operation)

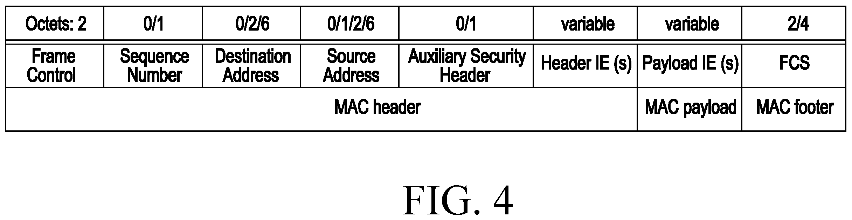

FIG. 4 illustrates a structure of a UWB MAC frame according to an embodiment of the disclosure;

In the embodiment of FIG. 4, the UWB MAC frame may follow the MAC frame structure of IEEE 802.15.4z, for example. In this disclosure, the UWB MAC frame may be simply referred to as a MAC frame or frame. As an embodiment, the UWB MAC frame may be used to transfer UWB data (e.g., UWB message, ranging message, control information, service data, application data, transaction data, etc.).

Referring to FIG. 4, the UWB MAC frame may include a MAC header (MHR), a MAC payload and/or a MAC footer (MFR).

(1) MAC header

The MAC header may include a Frame Control field, a Sequence Number field, a Destination Address field, a Source Address field, an Auxiliary Security Header field, and/or at least one Header IE field. According to an embodiment, some fields may not be included in the MAC header.

As an embodiment, the Frame Control field may include a Frame type field, a Security Enabled field, a Frame Pending field, an AR field, a PAN ID Compression field, a Sequence Number Suppression field, an IE Present field, a Destination Addressing Mode field, a Frame Version field, and/or a Source Addressing Mode field. Each field is described below.

The Frame Type field may indicate the frame type. As an embodiment, the frame type may include a data type and/or a multipurpose type.

The Security Enabled field may indicate whether an Auxiliary Security Header field exists. The Auxiliary Security Header field may include information required for security processing.

The Frame Pending field may indicate whether the device transmitting the frame has more data for the recipient. In other words, the Frame Pending field may indicate whether there is a pending frame for the recipient.

The AR field may indicate whether acknowledgment for frame reception is required from the recipient.

The PAN ID Compression field may indicate whether the PAN ID field exists.

The Sequence Number Suppression field may indicate whether the Sequence Number field exists. The Sequence Number field may indicate the sequence identifier for the frame.

The IE Present field may indicate whether the Header IE field and the Payload IE field are included in the frame.

The Destination Addressing Mode field may indicate whether the Destination Address field may include a short address (e.g., 16 bits) or an extended address (e.g., 64 bits). The Destination Address field may indicate the address of the recipient of the frame.

The Frame Version field may indicate the frame version. For example, the Frame Version field may be set to a value indicating IEEE std 802. 15.4z-2020.

The Source Addressing Mode field may indicate whether the Source Address field exists, and if the Source Address field exists, whether the Source Address field includes a short address (e.g., 16 bits) or an extended address (e.g., 64 bits). The Source Address field may indicate the address of the originator of the frame.

(2) MAC payload

The MAC payload may include at least one Payload IE field. As an embodiment, the Payload IE field may include a Vendor Specific Nested IE. As an embodiment, the Payload IE field may include the Payload IE field of the UWB message or control message.

(3) MAC footer

The MAC footer may include an FCS field. The FCS field may include a 16-bit CRC or a 32-bit CRC.

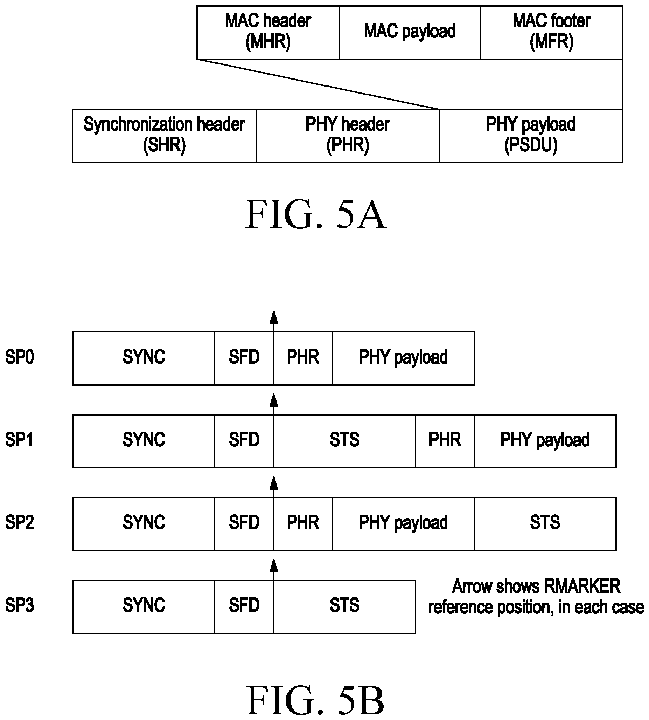

FIGS. 5A and 5B illustrate a structure of a UWB PHY packet according to an embodiment of the disclosure.

FIG. 5A illustrates an example structure of a UWB PHY packet to which the STS packet configuration is not applied, and FIG. 5B illustrates an example structure of a UWB PHY packet to which the STS packet configuration is applied. In the disclosure, the UWB PHY packet may be referred to as a PHY packet or a PHY PDU (PPDU).

Referring to FIG. 5A, the PPDU may include a synchronization header (SHR), a PHY header (PHR), and a PHY payload (PSDU). The PSDU may include a MAC frame. As shown in FIG. 4, the MAC frame may include a MAC header (MHR), a MAC payload and/or a MAC footer (MFR).

The synchronization header may be used for synchronization for signal reception and may include a SYNC field and a start-of-frame delimiter (SFD). The SFD field may be a field indicating the end of the SHR and the start of the data field.

The PHY header may provide information about the configuration of the PHY payload.

Meanwhile, the PHY layer of the UWB device may include an optional mode to provide a reduced on-air time for high density/low power operation. In this case, the UWB PHY packet may include an encrypted sequence (i.e., STS) to increase the integrity and accuracy of the ranging measurement timestamp. An STS may be included in the STS field of the UWB PHY packet and be used for secure ranging.

Referring to FIG. 5B, in the case of STS packet (SP) setting 0 (SP0), the STS field is not included in the PPDU (SP0 packet). In the case of SP setting 1 (SP1), the STS field is positioned immediately after the Start of Frame Delimiter (SFD) field and before the PHR field (SP1 packet). In the case of SP setting 2 (SP2), the STS field is positioned after the PHY payload (SP2 packet). In the case of SP setting 3 (SP3), the STS field is positioned immediately after the SFD field, and the PPDU does not include the PHR and data field (PHY payload) (SP3 packet). In other words, in the case of SP3, the PPDU does not include the PHR and PHY payload.

In the embodiment of FIG. 5B, each UWB PHY packet may include RMARKER for defining a reference time. RMARKER may be used to obtain the transmission time, reception time and/or time range of the ranging message (frame) in the UWB ranging procedure.

SP0, SP1 and SP3 may be settings that must be supported as mandatory when the STS packet setting is supported, and SP2 may be an optionally supported setting.

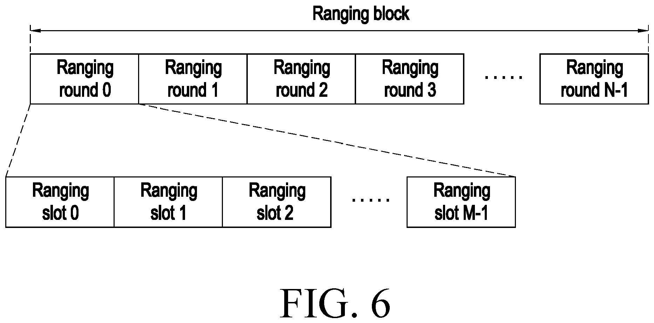

FIG. 6 illustrates an example of a structure of a ranging block and round used for UWB ranging according to an embodiment of the disclosure;

In this disclosure, the ranging block refers to a time period for ranging. The ranging round may be a period of sufficient duration to complete one entire range-measurement cycle in which a set of UWB devices participating in a ranging exchange involves. The ranging slot may be a sufficient period for transmission of at least one ranging frame (RFRAME) (e.g., ranging initiation/reply/final message, etc.).

As shown in FIG. 6, one ranging block may include at least one ranging round. Each ranging round may include at least one ranging slot.

When the ranging mode is a block-based mode, a mean time between contiguous ranging rounds may be a constant. Alternatively, when the ranging mode is an interval-based mode, the time between contiguous ranging rounds may be dynamically changed. In other words, the interval-based mode may adopt a time structure having an adaptive spacing.

The number and duration of slots included in the ranging round may be changed between ranging rounds.

In the disclosure, a ranging block, a ranging round, and a ranging slot may be abbreviated as a block, a round, and a slot.

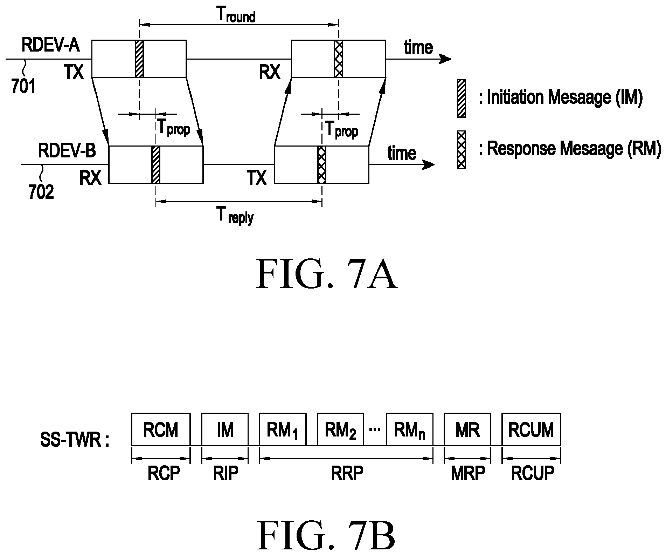

FIGS. 7A and 7B illustrate an SS-TWR ranging procedure according to an embodiment of the disclosure.

FIG. 7A illustrates schematic operations of a SS-TWR ranging procedure according to an embodiment of the disclosure.

In the embodiment of FIG. 7A, a first electronic device 701 and a second electronic device 702 may be the UWB device (e.g., RDEV, ERDEV, or FiRa device) of FIG. 1 or 2. In the embodiment of FIG. 7A, the first electronic device 701 may serve as an initiator, and the second electronic device 702 may serve as a responder.

In the embodiment of FIG. 7A, the SS-TWR ranging procedure may be a procedure for performing ranging through one round-trip time measurement.

Referring to FIG. 7A, in operation 710, the first electronic device 701 may initiate ranging exchange by transmitting an initiation message IM to the second electronic device 702.

In operation 720, the second electronic device 702 may complete the ranging exchange by transmitting a response message RM to the first electronic device 701.

Each electronic device 701 and 702 may measure the transmission time and reception time of a message and calculate the round trip time $T_{round}$ and reply time $T_{reply}$. Here, the round trip time $T_{round}$ may be a difference between the time when the first electronic device 701 transmits the initiation message to the second electronic device 702 and the time when the first electronic device 701 receives the response message from the second electronic device 702. The reply time $T_{reply}$ may be a difference between the time when the second electronic device 702 receives the initiation message from the first electronic device 701 and the time when the second electronic device 702 transmits the response message to the first electronic device 701.

As an embodiment, the UWB message/frame (or the UWB PHY packet (e.g., the UWB PHY packet of FIG. 5B) transferring the UWB message) may include a marker (RMARKER) for defining a reference time, and the electronic device 101 may perform ranging measurement through the RMARKER.

For example, the first electronic device 701 may measure the time between the RMARKER included in the packet/frame transmitted to the second electronic device 702 and the RMARKER included in the packet/frame received from the second electronic device 702, as $T_{round}$. The second electronic device 702 may measure the time between the RMARKER included in the packet/frame received from the first electronic device 701 and the RMARKER included in the packet/frame transmitted to the first electronic device 701, as $T_{reply}$.

The time-of-flight (ToF) time $T_{prop}$ may be calculated by Equation 1 below. Tprop may also be referred to as $\hat{T}prop$.

[Equation 1]

$$\hat{T}prop = \frac{1}{2}(T_{round} - T_{reply})$$

FIG. 7B illustrates an example message exchange operation of a SS-TWR ranging procedure according to an embodiment of the disclosure.

Referring to FIG. 7B, a SS-TWR ranging procedure may include at least one phase for message exchange. As an embodiment, the SS-TWR ranging procedure may include a ranging control phase (RCP), a ranging initiation phase (RIP), a ranging response phase (RRP), a measurement report phase (MRP), and/or a ranging control update phase (RCUP). Each phase is described below.

Ranging control phase (RCP): A phase in which the controller device transmits a ranging control message (RCM).

Ranging initiation phase (RIP): A phase in which the initiator device(s) transmits a ranging initiation message (RIM) to the responder device(s). In this disclosure, the RIM may be referred to as an IM.

Ranging response phase (RRP): A phase in which the responder device(s) transmits a ranging response message (RRM) to the initiator device. In this disclosure, the RRM may be referred to as an RM.

Measurement report phase (MRP): A phase in which devices participating in ranging exchange ranging measurement and related service information through a measurement report (MR).

Ranging control update phase (RCUP): A phase in which the controller device transmits a ranging control update message (RCUM). If present, the RCUP may be the last slot of the set of ranging rounds designated by the RCM.

A phase including the RIP and the RRP may be referred to as a ranging phase (RP).

According to an embodiment, the initiator device may also serve as a controller device. In this case, the RCP and the RIP may be merged into one step.

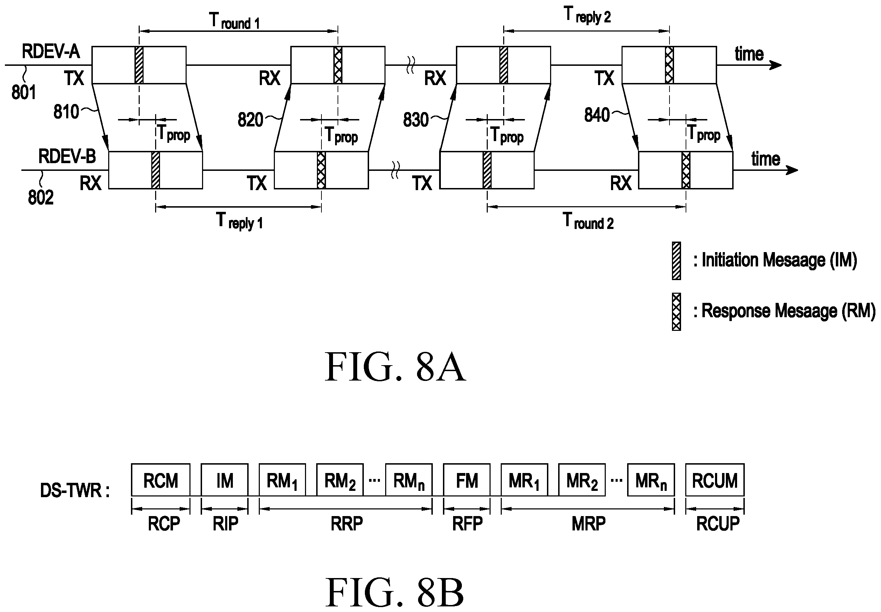

FIGS. 8A and 8B illustrate a DS-TWR ranging procedure according to an embodiment of the disclosure.

FIG. 8A illustrates schematic operations of a DS-TWR ranging procedure according to an embodiment of the disclosure.

In the embodiment of FIG. 8A, a first electronic device 801 and a second electronic device 802 may be the UWB device (e.g., RDEV, ERDEV, or FiRa device) of FIG. 1 or 2. In the embodiment of FIG. 8A, the first electronic device 801 may serve as an initiator, and the second electronic device 802 may serve as a responder.

In the embodiment of FIG. 8A, the SS-TWR ranging procedure may be a procedure for performing ranging through two round-trip time measurements. In this case, the first round-trip time measurement is initiated by the first electronic device 801, and the second round-trip time measurement is initiated by the second electronic device 802.

Referring to FIG. 8A, in operation 810, the first electronic device 801 may initiate measurement of a first round-trip time when the second electronic device 802 responds, by transmitting a first initiation message to the second electronic device 802. In operation 820, the second electronic device 802 may transmit a first response message corresponding to the first initiation message to the first electronic device 801.

In operation 830, the second electronic device 802 may initiate measurement of a second round-trip time when the first electronic device 801 responds, by transmitting a second initiation message to the first electronic device 801. In operation 840, the first electronic device 801 may transmit a second response message corresponding to the second initiation message to the second electronic device 802. As an embodiment, the second response message may be a termination message (ranging termination message).

According to an embodiment, the first response message of the second electronic device 802 for measuring the first round-trip time may be used as the second initiation message of the second electronic device 802 for measuring the second round-trip time. In this case, operation 820 and operation 830 may be the same operation.

Each electronic device 801 and 802 may measure the transmission time and reception time of the messages and calculate the first round trip time $T_{round1}$/second round trip time $T_{round2}$ and the first reply time $T_{reply1}$/second reply time $T_{reply2}$.

Here, the first round trip time $T_{round1}$ may be a difference between the time when the first electronic device 801 transmits the first initiation message to the second electronic device 802 and the time when the first electronic device 801 receives the first response message from the second electronic device 802. The second round trip time $T_{round2}$ may be a difference between the time when the second electronic device 802 transmits the second initiation message to the first electronic device 801 and the time when the second electronic device 802 receives the second response message from the first electronic device 801.

Here, the first reply time $T_{reply1}$ may be a difference between the time when the second electronic device 802 receives the first initiation message from the first electronic device 801 and the time when the second electronic device 802 transmits the first response message to the first electronic device 801. The second reply time $T_{reply2}$ may be a difference between the time when the first electronic device 801 receives the second initiation message from the second electronic device 802 and the time when the first electronic device 801 transmits the second response message to the second electronic device 802.

As an embodiment, the UWB message/frame (or the UWB PHY packet (e.g., the UWB PHY packet of FIG. 5B) transferring the UWB message) may include a marker (RMARKER) for defining a reference time, and the electronic device 101 may perform ranging measurement through the RMARKER.

For example, the first electronic device 801 may measure the time between the RMARKER included in the first packet/first frame transmitted to the second electronic device 802 and the RMARKER included in the second packet/second frame received from the second electronic device 802, as $T_{round1}$. The second electronic device 802 may measure the time between the RMARKER included in the first packet/first frame received from the first electronic device 801 and the RMARKER included in the second packet/second frame transmitted to the first electronic device 801, as $T_{reply1}$. The second electronic device 802 may measure the time between the RMARKER included in the third packet/third frame transmitted to the first electronic device 801 and the RMARKER included in the fourth packet/fourth frame received from the first electronic device 801, as $T_{round2}$. The first electronic device 801 may measure the time between the RMARKER included in the third packet/third frame received from the second electronic device 802 and the RMARKER included in the fourth packet/fourth frame transmitted to the second electronic device 802, as $T_{reply2}$.

The time-of-flight (ToF) time $T_{prop}$ may be calculated by Equation 2 below. Tprop may also be referred to as $\hat{T}prop$.

[Equation 2]

$$\hat{T}prop = \frac{(T_{round1} \times T_{round2} - T_{reply1} \times T_{reply2})}{(T_{round1} + T_{round2} + T_{reply1} + T_{reply2})}$$

FIG. 8B illustrates an example message exchange operation of a DS-TWR ranging procedure according to an embodiment of the disclosure.

Referring to FIG. 8B, a DS-TWR ranging procedure may include at least one phase for message exchange. As an embodiment, the DS-TWR ranging procedure may include a ranging control phase (RCP), a ranging initiation phase (RIP), a ranging response phase (RRP), a ranging final phase (RFP), a measurement report phase (MRP), and/or a ranging control update phase (RCUP). Each phase is described below.

Ranging control phase (RCP): A phase in which the controller device transmits a ranging control message (RCM).

Ranging initiation phase (RIP): A phase in which the initiator device(s) transmits a ranging initiation message (RIM) to the responder device(s).

Ranging response phase (RRP): A phase in which the responder device(s) transmits a ranging response message (RRM) to the initiator device.

Ranging final phase (RFP): A phase in which the initiator device transmits a ranging final message (RFM) to the responder device(s).

Measurement report phase (MRP): A phase in which devices participating in ranging exchange ranging measurement and related service information through a measurement report (MR).

Ranging control update phase (RCUP): A phase in which the controller device transmits a ranging control update message (RCUM). If present, the RCUP may be the last slot of the set of ranging rounds designated by the RCM.

A phase including the RIP, RRP, and the RFP may be referred to as a ranging phase (RP).

According to an embodiment, the initiator device may also serve as a controller device. In this case, the RCP and the RIP may be merged into one step.

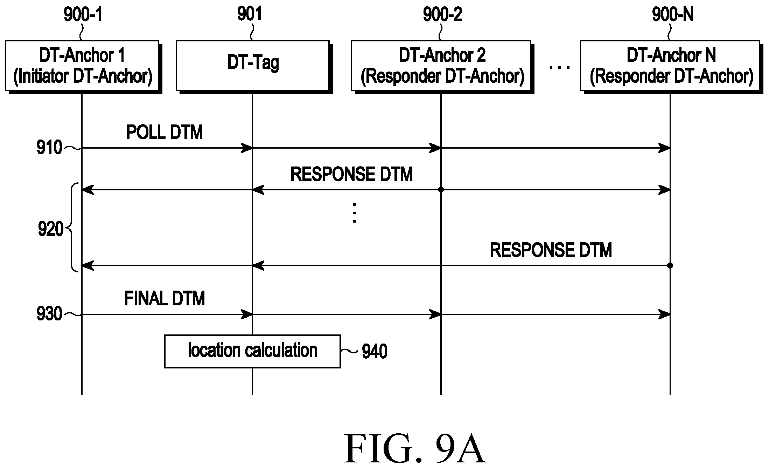

FIG. 9A illustrates schematic operations of a DL-TDoA (OWR) procedure according to an embodiment of the disclosure.

Referring to FIG. 9A, in operation 910, DT anchor 1 900-1, which is an initiator DL-TDoA (DT) anchor, may initiate a DT procedure by transmitting a poll message (Poll DTM).

In operation 920, DT anchor 2 to DT anchor N 900-2,..., 900-N, which are responder DT anchors, may transmit a response message (responder DTM). As an example, the responder DT anchor may identify whether a response message should be transmitted and/or a ranging slot used for transmitting the response message, based on scheduling information included in the poll message. As an embodiment, the response message may include information about a first reply time β. Here, the first reply time may be the time required for the corresponding responder DT anchor to receive the initiation message and transmit a response message corresponding to the initiation message.

In operation 930, DT anchor 1 900-1 may end the DT procedure by transmitting a termination message (final DTM). As an embodiment, the termination message may include information about a second reply time γ. Here, the second reply time may be the time required for the initiator DT anchor to receive the response message and transmit the termination message.

As shown in FIG. 9A, the DT tag 901 may receive (or overhear) the initiation message, the response message, and the termination message exchanged between DT anchors 900-1,..., 900-N and obtain (find out) a TDoA curve. The DT tag 901 may obtain a TDoA result by repeating the calculation process, shown in Equation 3 below, on the signals received from, e.g., three or more DT anchors.

In operation 940, the DT tag 901 may obtain a relative position to the DT anchor based on the TDoA result.

A specific calculation process for deriving the difference $d_2$-$d_1$ between the distance between the initiator DT anchor 900-1 and the DT tag 901 and the distance between the responder DT anchor (e.g., DT anchor 2 900-2) and the DT tag 901, as calculated based on the time values measured by the DT tag 901, may be as in Equation 3 below.

$$[\text{Equation 3}]$$

$$d_2\text{-}d_1 = ((\alpha\text{-}\delta) * \frac{\tau+\gamma}{\alpha+\delta} - (\beta\text{-}\gamma)) * C/2$$

Here, $\alpha$ denotes the time difference between the time $t_1$ when the initiation message transmitted from the initiator DT anchor is received by the DT tag and the time $t_2$ when the response message transmitted from the responder DT anchor is received by the DT tag. $\delta$ denotes the time difference between the time $t_2$ when the response message transmitted from the responder DT anchor is received by the DT tag and the time $t_3$ when the termination message transmitted from the initiation DT anchor is received by the DT tag. c denotes the speed at which the signal is transmitted.

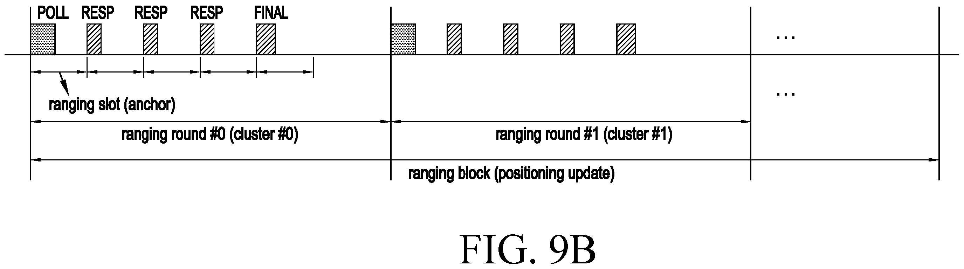

FIG. 9B illustrates an example message exchange operation of a DL-TDoA procedure (OWR) according to an embodiment of the disclosure.

Referring to FIG. 9B, the ranging block for DL-TDoA may include a plurality of ranging rounds.

As an embodiment, the ranging block may include a plurality of ranging rounds allocated for each cluster. For example, when n clusters are deployed, the ranging blocks may include a first ranging round (ranging round #0) allocated for a first cluster (cluster #0), a second ranging round (ranging round #0) allocated for a second cluster (cluster #1),... and an nth ranging round allocated for an nth cluster. Although not shown in FIG. 9B, according to an embodiment, a plurality of ranging rounds may be allocated to one cluster, or one ranging round may be allocated to a plurality of clusters.

Here, "cluster" may mean a set of DT anchors (UWB anchors) covering a specific area. The cluster may be composed of an initiator DT anchor and responder DT anchors responding thereto. The cluster area may be a space formed by the UWB anchors constituting the cluster. To support the positioning service for a wide area, a plurality of clusters may be configured to provide the positioning service to the UE. In this disclosure, a cluster may be referred to as a cell. In the disclosure, the operation of the cluster may be understood as the operation of anchor(s) belonging to the cluster.

A ranging round may include a plurality of ranging slots.

In an embodiment, the ranging round may include a plurality of ranging slots allocated for each ranging message transmitted by the UWB anchors belonging to the cluster associated with the ranging round. For example, if one cluster includes one initiator DT anchor and two responder DT anchors as shown in FIG. 9A, the ranging round for the cluster may include a first ranging slot allocated for transmission/reception of the Poll message of the Initiator DT anchor included in the first cluster, a second ranging slot allocated for transmission/reception of the response message of the first Responder DT anchor, a third ranging slot allocated for transmission/reception of the response message of the second Responder DT anchor, and a fourth ranging slot allocated for transmission/reception of the final message of the Initiator DT anchor. As an embodiment, a period other than the duration during which an associated ranging message is transmitted in the corresponding ranging slot may be a sleep period.

In this scheme, ranging slots may be allocated to the ranging round for each cluster.

Through the ranging block structure as in the embodiment of FIG. 9B, each cluster may transmit/receive its own ranging messages (e.g., Poll/Response/Final message) once in a ranging block, and the DT tag (UE) may receive these ranging messages and calculate its location. Such an operation may be repeated for each ranging block. Thus, the location of the UE may be updated in the period of the ranging block. Accordingly, in the embodiment of FIG. 9B, the ranging block may correspond to a period for positioning update.

A method for managing power for UWB communication is described below.

<Static power management method (static power allocation method)>

The static power management method may be a method for statically setting and using transmission power within an allowable range for each UWB channel considering an emission limit allowed for UWB communication. In general, when a static power management method is used, a UWB device sets maximum allocable power as transmission power considering the emission limit, and uses the maximum allocable power statically. As such, when the maximum power is statically used, the message reception rate increases, but the UWB device consumes more energy. In particular, such energy consumption may be a problem to battery-powered UWB devices (e.g., UWB tag devices). Therefore, it is necessary to consider a method for dynamically adjusting the transmission power according to the context.

<Dynamic power management method (dynamic power allocation method)>

The dynamic power management method may be the method for dynamically adjusting and using transmission power according to the context within an allowable range for each UWB channel.
Meanwhile, in order for the dynamic power management method to be effectively used in the UWB ranging procedure, the following requirements need to be met.
It is required to allocate appropriate power so that the reception rate of the ranging message is maintained at a predetermined level or more between UWB devices (ranging devices) participating in the ranging procedure.
Adaptive power allocation is required according to possible contexts (e.g., channel state change or message reception rate change) during the ranging operation.
Hereinafter, a new adaptive/dynamic power control method meeting these requirements is described.

<Closed loop power control method>

The closed loop power control method is one of dynamic power management methods and corresponds to a method using a logical feedback channel between an initiator and a responder(s).
Basically, ranging methods (e.g., SS-TWR, DS-TWR, and DL-TDoA(OWR)) have an operation structure in which a responder sends a response message in response to an initiation message from the initiator. In other words, a logical feedback channel that enables dynamic/adaptive power control is present between the initiator and the responder(s). Accordingly, the closed loop power control method may dynamically/adaptively control power using the logical feedback channel between the initiator and the responder(s).
The closed loop power control method (algorithm) may include at least one of the following features.

- Presence of applicable quantized power level set $P = \{p_0, p_1, ..., p_{max}\}$. (where, $P_0$ is the lowest power level in the power level set, and $P_{max}$ is the maximum power level in the power level set.)
- The initial transmission power is set as the maximum allocable power $P_{max}$.
- Adjust transmission power between the initiator and the responder based on a result (e.g., a result value of whether a response message is transmitted/ranging) of transmission/reception of a ranging message between the initiator and the responder.

    1) reduce power level when the initiator succeeds in reception of a response message from the responder ($p_L \rightarrow p_{L-1}$)
    2) increase power level when the initiator fails in reception of a response message from the responder (e.g., timeout) ($p_{L-1} \rightarrow p_L$)
    3) adjust power level using a ranging result value between the initiator and the responder.

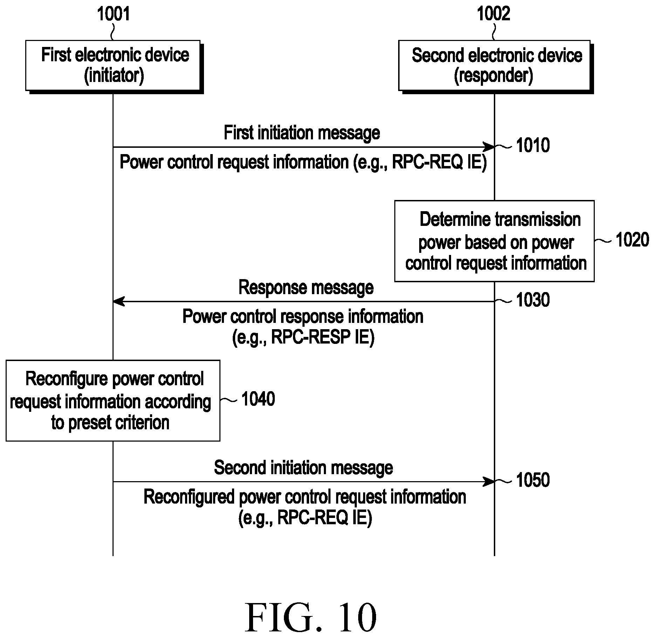

Various embodiments of a closed loop power control method are exemplarily described below with reference to FIGS. 10 to 23.
FIG. 10 illustrates a method for performing a dynamic power control operation by a plurality of electronic device 101s according to an embodiment of the disclosure.
In the embodiment of FIG. 10, the dynamic power control operation may be an operation following the closed loop power control method described above.
In the embodiment of FIG. 10, the first electronic device 1001 may be a UWB device that serves as an initiator, and the second electronic device 1002 may be a UWB device that serves as a responder.
In the embodiment of FIG. 10, the first electronic device 1001 and the second electronic device 1002 may perform a ranging procedure using a preset ranging method (e.g., one of an SS-TWR method, a DS-TWR method, or a DL-TDoA (OWR) method).

Referring to FIG. 10, in operation 1010, the first electronic device 1001 may transmit an initiation message (a first initiation message) for initiating ranging to the second electronic device 1002.

As an embodiment, when the SS-TWR method/DS-TWR method is used, the initiation message may be, e.g., the ranging initiation message RIM of FIG. 7 or 8. When the DL-TDoA method is used, the initiation message may be, e.g., the Poll message Poll DTM of FIG. 9.

As an embodiment, the initiation message may include power control request information (e.g., the RPC-REQ information element IE). The power control request information may include information for requesting ranging power control (RPC).

In an embodiment, the power control request information may include ranging power control (RPC)-related information for a specific responder participating in the ranging procedure.

In another embodiment, the power control request information may include RPC-related information for all responders participating in the ranging procedure. In this case, individual RPC-related information for each of the responders participating in the ranging procedure may be included in the power control request information in the form of a list element, or one RPC-related information for the responders participating in the ranging procedure may be included in the power control request information.

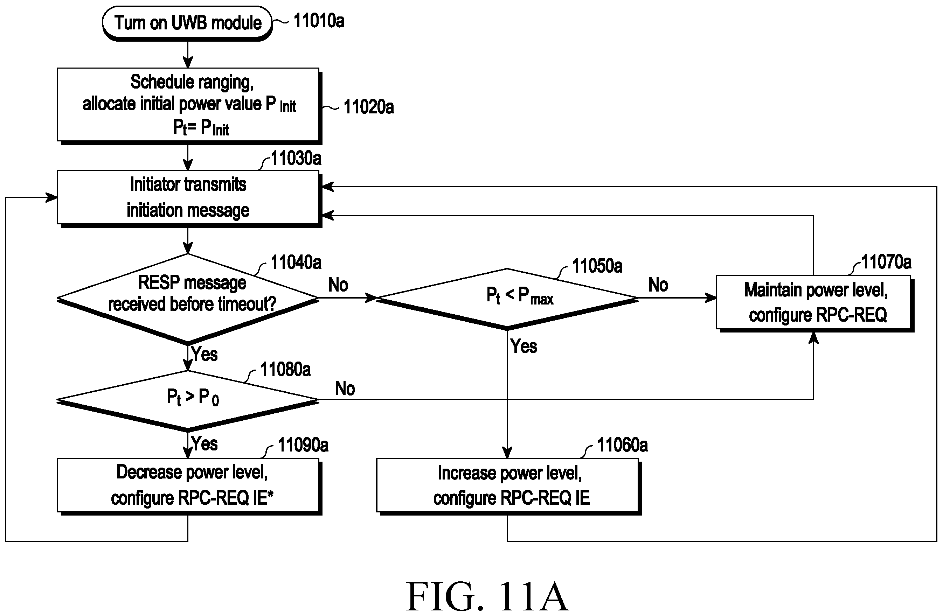

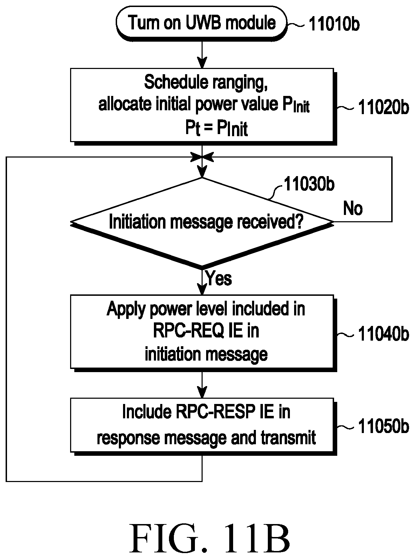

In operation 1020, the second electronic device 1002 may determine the transmission power based on the power control request information included in the initiation message. This is described below with reference to FIGS. 11 to 15.

In operation 1030, the second electronic device 1002 may transmit a response message corresponding to the first initiation message to the first electronic device 1001.

As an embodiment, when the SS-TWR method/DS-TWR method is used, the response message may be, e.g., the ranging response message RRM of FIG. 7 or 8. When the DL-TDoA method is used, the response message may be, e.g., the response message Response DTM of FIG. 9.

As an embodiment, the response message may include power control response information (e.g., the RPC-RESP information element IE). The power control response information may include information for responding to the ranging power control request of the power control request information. As an embodiment, the power control response information may include information-related to ranging power control (RPC) for the responder transmitting the response message.

In operation 1040, the first electronic device 1001 may reconfigure (or configure) power control request information (e.g., RPC-REQ IE) according to a preset criterion. The reconfigured power control request information may include information for requesting reconfigured ranging power control (RPC).

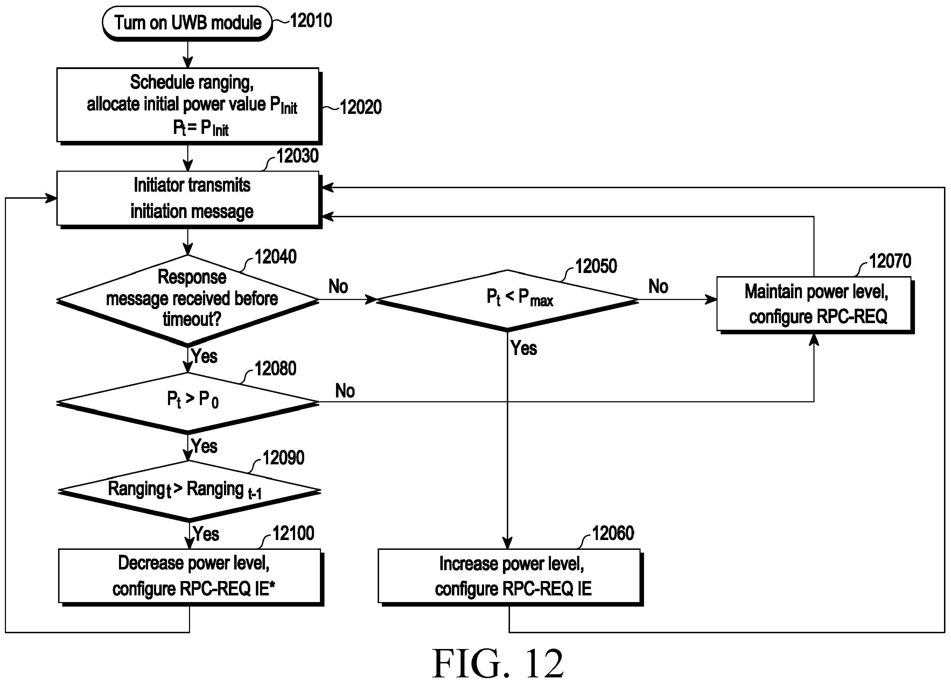

As an embodiment, the first electronic device 1001 may reconfigure the power control request information based on the result of receiving the response message and/or the ranging result. Meanwhile, an embodiment (first embodiment) of adjusting power based on the response message reception result is described below with reference to FIG. 11, and an embodiment (second embodiment) of adjusting power based on the response message reception result and the ranging result is described below with reference to FIG. 12.

In operation 1050, the first electronic device 1001 may transmit an initiation message (a second initiation message) including the reconfigured power control request information to the second electronic device 1002.

As an embodiment, the second initiation message may be transmitted in a ranging round subsequent to the ranging round in which the first initiation message is transmitted. Meanwhile, the power control request information about the first initiation message may be used to control transmission power in the ranging round in which the first initiation message is transmitted, and the reconfigured power control request information about the second initiation message may be used to control transmission power in the ranging round in which the second initiation message is transmitted. As such, it is possible to dynamically/adaptively control the ranging device(s) for each ranging round by including the power control request information in the initiation message of the corresponding ranging round.

In an embodiment, when the value of the power control request information is the same as the value of the reconfigured power control request information (e.g., when it is unnecessary to change the value of the power control request information), the first electronic device 1001 may not include the reconfigured power control request information in the second initiation message. As such, when the current initiation message does not include the power control request information, the responder may continuously maintain the transmission power determined based on the power control request information included in the previous initiation message, or may use the initial transmission power.

<First embodiment>

The first embodiment corresponds to an embodiment in which the initiator dynamically/adaptively adjusts the transmission power based on the result of receiving the response message from the responder.

FIG. 11A illustrates a method for performing a dynamic power control operation by a first electronic device according to a first embodiment of the disclosure.

In the embodiment of FIG. 11A, the dynamic power control operation may be an operation following the closed loop power control method described above.

In the embodiment of FIG. 11A, the first electronic device may be a UWB device that serves as an initiator, and the second electronic device may be a UWB device that serves as a responder.

Referring to FIG. 11A, in operation 11010a, the first electronic device may activate (on) a UWB module for UWB communication. As such, the first electronic device may save power by activating the UWB module (UWB communication module) only when necessary.

In operation 11020a, a scheduling operation (ranging scheduling) for UWB ranging may be performed. As an embodiment, the ranging scheduling operation may be performed by an electronic device that serves as a controller. For example, when the first electronic device serves as a controller, the first electronic device may schedule UWB ranging with other electronic devices in the current ranging round. Through this scheduling operation, ranging slots for transmitting the response message may be determined.

As an embodiment, when scheduling-based ranging is performed, responders participating in UWB ranging may transmit response messages corresponding to the initiator's initiation message in their own ranging slots allocated by the controller. When contention-based ranging is performed, responders participating in UWB ranging may transmit a response message in any one of the ranging slots for transmitting the response message. In this case, a conflict between response messages may occur.

In operation 11020a, the initial transmission power $P_{Init}$ for UWB ranging may be allocated and set to the transmission power value Pt ($P_t=P_{Init}$). As an embodiment, the allocation/setting of the initial transmission power may be performed by the electronic device that serves as the controller or the electronic device (e.g., the first electronic device) that serves as the initiator. In an embodiment, the initial transmission power $P_{Init}$ may be the maximum allowable power in the corresponding UWB channel.

In operation 11030a, the first electronic device may transmit an initiation message (first ranging message) for initiating UWB ranging in the current ranging round.

As an embodiment, the initiation message may be a ranging initiation message (RIM) for TWR or a poll message (Poll DTM) for DL-TDoA (OWR). For example, when the UWB ranging method is DS-TWR or SS-TWR (TWR), the first electronic device may transmit a RIM message. As another example, when the UWB ranging method is DL-TDoA (OWR), the first electronic device may transmit a Poll message.

As an embodiment, the initiation message may include power control request information (e.g., RPC-REQ IE) including information about the set transmission power value Pt. As an embodiment, the transmission power of the signal for transmitting the initiation message may be determined using the set transmission power value Pt.

The second electronic device receiving the initiation message may transmit a response message (second ranging message) in response to the initiation message. As an embodiment, the response message may be an RRM message corresponding to the RIM message or a response DTM corresponding to the Poll message. For example, when the UWB ranging method is DS-TWR or SS-TWR (TWR), the second electronic device may transmit an RRM message corresponding to the RIM message to the first electronic device. As another example, when the UWB ranging method is OWR (DL-TDoA), the second electronic device may transmit a response message corresponding to the Poll message to the first electronic device.

In operation 11040a, the first electronic device may determine whether the response message to the initiation message is successfully received according to the preset criterion. For example, the first electronic device may determine whether a response message is received within a preset period (before timeout). For example, the first electronic device may determine whether the response message of the corresponding responder is received before the period of the ranging slot allocated for the corresponding responder expires (before timeout).

In operation 11050a, when the response message is not successfully received (e.g., when the response message is not received before timeout), the first electronic device may determine whether the set transmission power value Pt is smaller than the maximum power value $P_{max}$.

In operation 11060a, when the set transmission power value Pt is smaller than the maximum power value $P_{max}$, the first electronic device may increase the power value (e.g., power level) and may configure power control request information (e.g., RPC-REQ IE) based on the increased transmission power value. Thereafter, the first electronic device may perform operation 11030a again. For example, the first electronic device may transmit the initiation message including the power control request information configured in the next ranging round of the current ranging round.

In operation 11070a, when the set transmission power value Pt is not smaller than the maximum power value $P_{max}$ (e.g., when they are the same), the first electronic device may maintain the power value (e.g., the power level) and may configure power control request information (e.g., RPC-REQ IE) based on the maintained transmission power value. Thereafter, the first electronic device may perform operation 11030a again. For example, the first electronic device may transmit the initiation message including the power control request information configured in the next ranging round of the current ranging round.

In operation 11080a, when the response message is successfully received, the first electronic device may determine whether the set transmission power value Pt is larger than the minimum power value $P_0$.

In operation 11090a, when the set transmission power value Pt is larger than the minimum power value $P_0$, the first electronic device may reduce the power value (e.g., the power level) and may configure power control request information (e.g., RPC-REQ IE) based on the reduced transmission power value. Thereafter, the first electronic device may perform operation 11030a again. For example, the first electronic device may transmit the initiation message including the power control request information configured in the next ranging round of the current ranging round.

Alternatively, when the set transmission power value Pt is not larger than the minimum power value $P_0$ (e.g., when they are the same), the first electronic device may maintain the power value (e.g., the power level) according to operation 11070a and may configure power control request information (e.g., RPC-REQ IE) based on the maintained transmission power value. Thereafter, the first electronic device may perform operation 11030a again. For example, the first electronic device may transmit the initiation message including the power control request information configured in the next ranging round of the current ranging round.

As such, in the embodiment of FIG. 11A, it is possible to minimize power consumption while maintaining the reception rate of the next message at a predetermined level or more by dynamically adjusting the transmission power used next (e.g., the ranging round subsequent to the current ranging round) according to a result of currently (e.g., in the current ranging round) receiving the response message.

FIG. 11B illustrates a method for performing a dynamic power control operation by a first electronic device according to a second embodiment of the disclosure.

In the embodiment of FIG. 11B, the dynamic power control operation may be an operation following the closed loop power control method described above.

In the embodiment of FIG. 11B, the first electronic device may be a UWB device that serves as an initiator, and the second electronic device may be a UWB device that serves as a responder.

Referring to FIG. 11B, in operation 11010b, the second electronic device may activate (on) a UWB module for UWB communication. As such, the second electronic device may save power by activating the UWB module (UWB communication module) only when necessary.

In operation 11020b, a scheduling operation (ranging scheduling) for UWB ranging may be performed. As an embodiment, the ranging scheduling operation may be performed by an electronic device that serves as a controller. For example, when the first electronic device serves as a controller, the first electronic device may schedule UWB ranging with other electronic devices in the current ranging round. Through this scheduling operation, ranging slots for transmitting the response message may be determined.

As an embodiment, when scheduling-based ranging is performed, responders participating in UWB ranging may transmit response messages corresponding to the initiator's initiation message in their own ranging slots allocated by the controller. When contention-based ranging is performed, responders participating in UWB ranging may transmit a response message in any one of the ranging slots for transmitting the response message. In this case, a conflict between response messages may occur.

In operation 11020b, the initial transmission power $P_{Init}$ for UWB ranging may be allocated and set to the transmission power value Pt ($P_t = P_{Init}$). As an embodiment, the allocation/setting of the initial transmission power may be performed by the electronic device that serves as the controller or the electronic device (e.g., the first electronic device) that serves as the initiator. In an embodiment, the initial transmission power $P_{Init}$ may be the maximum allowable power in the corresponding UWB channel.

In operation 11030b, the second electronic device may determine whether an initiation message has been received from the first electronic device. As an embodiment, the initiation message may be a ranging initiation message (RIM) for TWR or a poll message (Poll DTM) for DL-TDoA (OWR). For example, when the UWB ranging method is DS-TWR or SS-TWR (TWR), the second electronic device may receive a RIM message. As another example, when the UWB ranging method is DL-TDoA (OWR), the second electronic device may receive a Poll message.

As an embodiment, the initiation message may include power control request information (e.g., RPC-REQ IE) including information about the set transmission power value Pt. As an embodiment, the transmission power of the signal for transmitting the initiation message may be determined using the set transmission power value Pt.

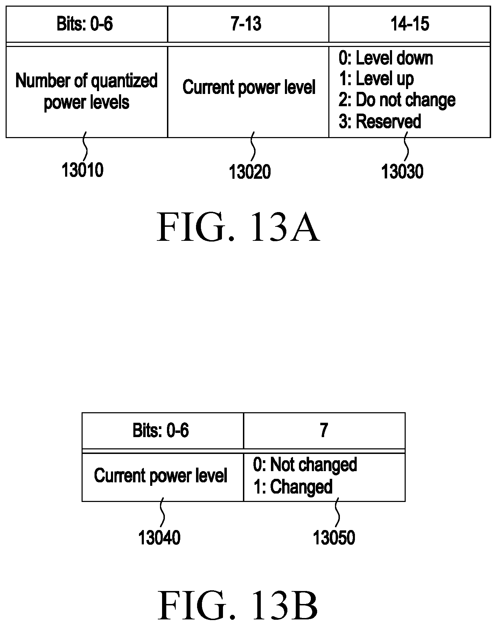

In operation 1140b, when the initiation message is received, the second electronic device may determine the transmission power value (e.g., power level) based on the power control request information (e.g., RPC-REQ IE) included in the initiation message. This is described below with reference to FIGS. 13 to 15.

In operation 11050b, the second electronic device may configure power control response information (e.g., RPC-RESP IE) based on the determined transmission power value and transmit a response message including the power control response information to the first electronic device.

As an embodiment, the response message may be an RRM message corresponding to the RIM message or a response DTM corresponding to the Poll message. For example, when the UWB ranging method is DS-TWR or SS-TWR (TWR), the second electronic device may transmit an RRM message corresponding to the RIM message to the first electronic device. As another example, when the UWB ranging method is OWR (DL-TDoA), the second electronic device may transmit a response message corresponding to the Poll message to the first electronic device.

As an embodiment, the second electronic device may transmit the response message to the first electronic device in its own ranging slot allocated by the controller. Thereafter, the second electronic device may perform operation 11030b again. For example, the second electronic device may determine whether the initiation message including the power control request information has been received in the next ranging round of the current ranging round.

<Second embodiment>

The second embodiment corresponds to an embodiment in which the initiator dynamically/adaptively adjusts the transmission power based on the result of receiving the response message from the responder and the ranging result. As an embodiment, the ranging result may be the distance between the initiator and the responder or the ToF obtained through UWB ranging (e.g., SS-TWR, DS-TWR, or DL-TDoA (OWR)). As compared with the first embodiment, the second embodiment is capable of more accurate, efficient power adjustment by adjusting the transmission power further using the ranging result.

FIG. 12 illustrates a method for performing a dynamic power control operation by a first electronic device according to a second embodiment of the disclosure.

In the embodiment of FIG. 12, the dynamic power control operation may be an operation following the closed loop power control method described above.

In the embodiment of FIG. 12, the first electronic device may be a UWB device serving as an initiator, and the second electronic device may be a UWB device serving as a responder.

Referring to FIG. 12, in operation 12010, the first electronic device may activate (on) a UWB module for UWB communication. As such, the first electronic device may save power by activating the UWB module (UWB communication module) only when necessary.

In operation 12020, a scheduling operation (ranging scheduling) for UWB ranging may be performed. As an embodiment, the ranging scheduling operation may be performed by an electronic device that serves as a controller. For example, when the first electronic device serves as a controller, the first electronic device may schedule UWB ranging with other electronic devices in the current ranging round. Through this scheduling operation, ranging slots for transmitting the response message may be determined.

As an embodiment, when scheduling-based ranging is performed, responders participating in UWB ranging may transmit response messages corresponding to the initiator's initiation message in their own ranging slots allocated by the controller. When contention-based ranging is performed, responders participating in UWB ranging may transmit a response message in any one of the ranging slots for transmitting the response message. In this case, a conflict between response messages may occur.

In operation 12020, the initial transmission power $P_{Init}$ for UWB ranging may be allocated and set to the transmission power value Pt ($P_t=P_{Init}$). As an embodiment, the allocation/setting of the initial transmission power may be performed by the electronic device that serves as the controller or the electronic device (e.g., the first electronic device) that serves as the initiator. In an embodiment, the initial transmission power $P_{Init}$ may be the maximum allowable power in the corresponding UWB channel.

In operation 12030, the first electronic device may transmit an initiation message (first ranging message) for initiating UWB ranging in the current ranging round.

As an embodiment, the initiation message may be a ranging initiation message (RIM) for TWR or a poll message (Poll DTM) for DL-TDoA (OWR). For example, when the UWB ranging method is DS-TWR or SS-TWR (TWR), the first electronic device may transmit a RIM message. As another example, when the UWB ranging method is DL-TDoA (OWR), the first electronic device may transmit a Poll message.

As an embodiment, the initiation message may include power control request information (e.g., RPC-REQ IE) including information about the set transmission power value Pt. As an embodiment, the transmission power of the signal for transmitting the initiation message may be determined using the set transmission power value Pt.

The second electronic device receiving the initiation message may transmit a response message (second ranging message) in response to the initiation message. As an embodiment, the response message may be an RRM message corresponding to the RIM message or a response DTM corresponding to the Poll message. For example, when the UWB ranging method is DS-TWR or SS-TWR (TWR), the second electronic device may transmit an RRM message corresponding to the RIM message to the first electronic device. As another example, when the UWB ranging method is OWR (DL-TDoA), the second electronic device may transmit a response message corresponding to the Poll message to the first electronic device.

Meanwhile, the operations of the second electronic device (responder) in the second embodiment are the same as the operations of the second electronic device in the first embodiment. Accordingly, no duplicate description is given, and the operations of the second electronic device of FIG. 11B may be referred to for the operations of the second electronic device of FIG. 12.

In operation 12040, the first electronic device may determine whether the response message to the initiation message is successfully received according to the preset criterion. For example, the first electronic device may determine whether a response message is received within a preset period (before timeout). For example, the first electronic device may determine whether the response message of the corresponding responder is received before the period of the ranging slot allocated for the corresponding responder expires (before timeout).

In operation 12050, when the response message is not successfully received (e.g., when the response message is not received before timeout), the first electronic device may determine whether the set transmission power value Pt is smaller than the maximum power value $P_{max}$.

In operation 12060, when the set transmission power value Pt is smaller than the minimum power value $P_{max}$, the first electronic device may increase the power value (e.g., power level) and may configure power control request information (e.g., RPC-REQ IE) based on the increased transmission power value. Thereafter, the first electronic device may perform operation 12030 again. For example, the first electronic device may transmit the initiation message including the power control request information configured in the next ranging round of the current ranging round.

In operation 12070, when the set transmission power value Pt is not smaller than the maximum power value $P_{max}$ (e.g., when they are the same), the first electronic device may maintain the power value (e.g., the power level) and may configure power control request information (e.g., RPC-REQ IE) based on the maintained transmission power value. Thereafter, the first electronic device may perform operation 12030 again. For example, the first electronic device may transmit the initiation message including the power control request information configured in the next ranging round of the current ranging round.

In operation 12080, when the response message is successfully received, the first electronic device may determine whether the set transmission power value Pt is larger than the minimum power value $P_0$.

In operation 12090, when the set transmission power value Pt is larger than the minimum power value $P_0$, the first electronic device may determine whether the current ranging result $Ranging_t$ is larger than the previous ranging result $Ranging_{t-i}$. As an embodiment, the ranging result may be the distance between the first electronic device (initiator) and the second electronic device (responder) or the ToF obtained through UWB ranging (e.g., SS-TWR, DS-TWR, or DL-TDoA (OWR)).

When the current ranging result $Ranging_t$ is larger than the previous ranging result value $Ranging_{t-1}$, the first electronic device may increase the power value (e.g., power level) according to operation 12060 and configure power control request information (e.g., RPC-REQ IE) based on the increased transmission power value. As such, in the embodiment of FIG. 12, although the response message is successfully received further using the UWB ranging result (e.g., information about the distance between the first electronic device (initiator) and the second electronic device (responder)), if the distance between the two electronic devices is increased as compared with the previous distance, the message reception rate may further be increased by increasing, rather than reducing, the transmission power. Thereafter, the first electronic device may perform operation 12030 again. For example, the first electronic device may transmit the initiation message including the power control request information configured in the next ranging round of the current ranging round.

In operation 12100, when the current ranging result $Ranging_t$ is not lager than, or smaller than, the previous ranging result value $Ranging_{t-1}$, the first electronic device may decrease the power value (e.g., power level) and configure power control request information (e.g., RPC-REQ IE) based on the decreased transmission power value. As such, the embodiment of FIG. 12 may reduce power consumption while maintaining the message reception rate at a predetermined level or more by reducing transmission power only when the distance between the two electronic devices is reduced as compared with the previous distance although the response message is successfully received further using the UWB ranging result (e.g., information about the distance between the first electronic device (initiator) and the second electronic device (responder)). Thereafter, the first electronic device may perform operation 12030 again. For example, the first electronic device may transmit the initiation message including the power control request information configured in the next ranging round of the current ranging round.

As such, in the embodiment of FIG. 12, it is possible to minimize power consumption while maintaining the reception rate of the next message in the optimal state by dynamically adjusting the transmission power used next (e.g., the ranging round subsequent to the current ranging round) according to a result of currently (e.g., in the current ranging round) receiving the response message.

<First embodiment of RPC-REQ information element and RPC-RESP information element>

The first embodiment of the RPC-REQ information element and the RPC-RESP information element corresponds to an embodiment of expressing transmission power as a quantized power level.

FIGS. 13A and 13B illustrate an RPC-REQ information element and an RPC-RESP information element according to an embodiment of the disclosure.

FIG. 13A illustrates an example of the RPC-REQ information element, and FIG. 13B illustrates an example of the RPC-RESP information element.

The RPC-REQ information element may be an IE (e.g., payload IE) used by the initiator to transmit information (RPC-related information) for ranging power control to the responder(s). As an embodiment, the RPC-REQ information element may be configured for each responder participating in ranging, or one RPC-REQ information element may be configured for responders participating in ranging.

In an embodiment, the RPC-REQ information element may be included in the initiator's initiation message and transmitted to the responder. For example, the RPC-REQ information element may be included as payload IE in the RIM message. As another example, the RPC-REQ information element may be included as payload IE in the poll message.

As an embodiment, when the initiator also serves as the controller, the RPC-REQ information element may be included in the advanced ranging control (ARC) payload IE. Here, the ARC payload IE (ARC IE) may be a payload IE used by the controller to transmit ranging configuration information to the controlee. As an embodiment, the ARC payload IE may be transmitted through a control message (e.g., RCM message), RIM message, or the poll message. For a description of ARC payload IE, the description of ARC IE in IEEE 802.15.4z may be referred to.

The RPC-RESP information element may be an IE (e.g., payload IE) used by the responder to respond to the RPC-REQ information element received from the initiator.

As an embodiment, the RPC-RESP information element may be included in the responder's response message and transmitted to the initiator device. For example, the RPC-RESP information element may be included as payload IE in the RRM message corresponding to the RIM message. As another example, the RPC-RESP information element may be included as payload IE in the response message corresponding to the poll message.

As an embodiment, when the initiator device also serves as the controller, the RPC-RESP information element may be transmitted along with the ranging changing request (RCR) payload IE. For example, when the initiator device also serves as the controller device, the RPC-RESP information element may be transmitted, along with the RCR payload IE, while being included in the ACR payload IE, or as a separate payload IE.

Here, the RCR payload IE (RCR IE) may be a payload IE used by the controlee device to request the controller device to change the current ranging configuration information. Meanwhile, the ARC payload IE (ARC IE) may be used by the controlee device along with the RCR payload IE (RCR IE) to transmit the controlee device's preferred ranging parameters to the controller device. As an embodiment, the ARC payload IE and/or RCR payload IE may be transmitted through a response message corresponding to the RRM message or the poll message. For a description of RCR payload IE, the description of RCR IE in IEEE 802.15.4z may be referred to.

Referring to FIG. 13A, the RPC-REQ information element may include a number of quantized power levels field 13010, a current power level field 13020, and/or a control field 13030. In FIG. 13A, the current power level field 13020 of the RPC-REQ IE may be referred to as a first current power level field, and the control field 13030 may be referred to as a first control field.

The number of quantized power levels field 13010 may indicate the number of quantized power levels. The allowable range of power may be expressed as quantized power levels. The number of quantized power levels field 13010 may provide information about the number of quantized power levels. For example, a quantized power level set, such as $P = \{p_0, p_1, ..., p_{max}\}$, constituted of N power levels may be configured, and the number of power levels field 13010 may indicate the number N of power levels included in the power level set. Meanwhile, the information about the configured quantized power level set(s) may be previously shared between the devices participating in the ranging procedure.

The current power level field 13020 may indicate the current power level. The current power level (first current power level) indicated by the current power level field 13020 is one of the quantized power levels and may be the power level determined/used by the initiator. The first current power level may be used by the initiator to transmit an initiation message.

The control field 13030 may provide control information for adjustment of the power level of the responder(s). For example, the control field 13030 may be set to one of a first value (e.g., 0) indicating to decrease (level down) the power level to be lower than the current power level indicated by the current power level field 13020, a second value (e.g., 1) indicating to increase (level up) the power level to be higher than the current power level indicated by the current power level field 13020, and a third value (e.g., 2) indicating not to change the power level (i.e., maintain the power level as the current power level indicated by the current power level field 13020).

Referring to FIG. 13B, the RPC-RESP information element may include a current power level field 13040 and/or a control field 13050. In FIG. 13B, the current power level field 13040 of the RPC-RESP IE may be referred to as a second current power level field, and the control field 13050 may be referred to as a second control field.

The current power level field 13040 may indicate the current power level. As an embodiment, the current power level (second current power level) indicated by the current power level field 13040 is one of the quantized power levels, and may be a power level determined by the responder based on the RPC-REQ information element. The second current power level may be used by the responder to transmit a response message.

As an embodiment, the responder may determine the second current power level based on the RPC-REQ information element included in the initiation message.

For example, when the first control information 13030 of the RPC-REQ information element is set to the first value indicating to decrease the power level to be lower than the current power level, the responder may determine a power level (e.g., a power level one or two levels lower than the first current power level) lower than the first current power level among the quantized power levels, as the second current power level. As another example, when the first control information 13030 of the RPC-REQ information element is set to the second value indicating to increase the power level to be higher than the current power level, the responder may determine a power level (e.g., a power level one or two levels higher than the first current power level) higher than the first current power level among the quantized power levels, as the second current power level. As another example, when the first control information 13030 of the RPC-REQ information element is set to the third value indicating not to change the power level, the responder may determine the first current power level as the second current power level.

The value of the second current power level determined in such a manner may be set to the value of the second current power level of the second current power level field 13040 of the RPC-REQ information element.

The control field 13050 may provide information about whether the current power level has changed. For example, the control field 13050 may provide information about the state of the second current power level. As an embodiment, the control field 13050 may be set to either a first value (e.g., 0) indicating that the current power level has not changed or a second value (e.g., 1) indicating that the current power level has changed. For example, when the second current power level is set to the same value as the first current power level, the control field 13050 may be set to the first value indicating that the current power level has not changed. As another example, when the second current power level is set to a different value from the first current power level, the control field 13050 may be set to the second value indicating that the current power level has changed.

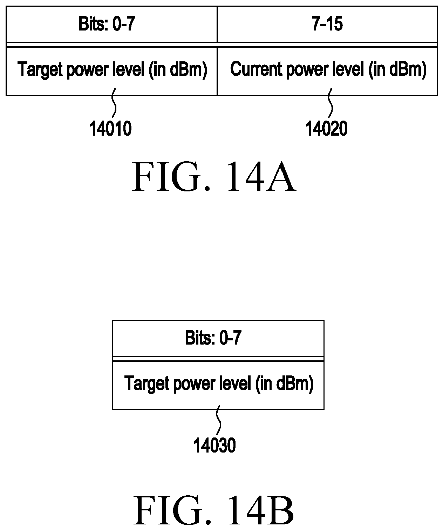

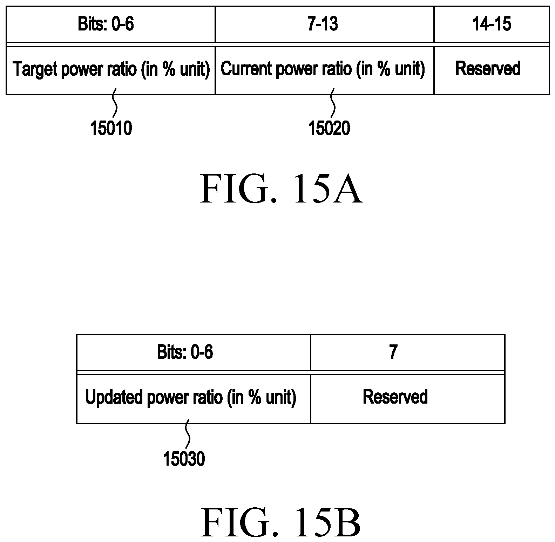

Meanwhile, unlike in the embodiment of FIG. 14/15 described below, in the embodiment of FIG. 13, the initiator provides only an indication for power level up/down or maintaining, as control information, instead of directly providing the power value/level to be used by the responder as a specific value/ratio, so that the responder may flexibly set and use the power level to be used according to a preset criterion.

<Second embodiment of RPC-REQ information element and RPC-RESP information element>

The second embodiment of the RPC-REQ information element and the RPC-RESP information element corresponds to an embodiment of expressing transmission power as an absolute value (e.g., in dBm).

FIGS. 14A and 14B illustrate an RPC-REQ information element and an RPC-RESP information element according to another embodiment of the disclosure.

FIG. 14A illustrates an example of the RPC-REQ information element, and FIG. 14B illustrates an example of the RPC-RESP information element.

The RPC-REQ information element may be an IE (e.g., payload IE) used by the initiator to transmit information (RPC-related information) for ranging power control to the responder(s). As an embodiment, the RPC-REQ information element may be configured for each responder participating in ranging, or one RPC-REQ information element may be configured for responders participating in ranging.

In an embodiment, the RPC-REQ information element may be included in the initiator's initiation message and transmitted to the responder. For example, the RPC-REQ information element may be included as payload IE in the RIM message. As another example, the RPC-REQ information element may be included as payload IE in the poll message.

As an embodiment, when the initiator also serves as the controller, the RPC-REQ information element may be included in the advanced ranging control (ARC) payload IE. Here, the ARC payload IE (ARC IE) may be a payload IE used by the controller to transmit ranging configuration information to the controlee. As an embodiment, the ARC payload IE may be transmitted through a control message (e.g., RCM message), RIM message, or the poll message. For a description of ARC payload IE, the description of ARC IE in IEEE 802.15.4z may be referred to.

The RPC-RESP information element may be an IE (e.g., payload IE) used by the responder to respond to the RPC-REQ information element received from the initiator.

As an embodiment, the RPC-RESP information element may be included in the responder's response message and transmitted to the initiator device. For example, the RPC-RESP information element may be included as payload IE in the RRM message corresponding to the RIM message. As another example, the RPC-RESP information element may be included as payload IE in the response message corresponding to the poll message.

As an embodiment, when the initiator device also serves as the controller, the RPC-RESP information element may be transmitted along with the ranging changing request (RCR) payload IE. For example, when the initiator device also serves as the controller device, the RPC-RESP information element may be transmitted, along with the RCR payload IE, while being included in the ACR payload IE, or as a separate payload IE.

Here, the RCR payload IE (RCR IE) may be a payload IE used by the controlee device to request the controller device to change the current ranging configuration information. Meanwhile, the ARC payload IE (ARC IE) may be used by the controlee device along with the RCR payload IE (RCR IE) to transmit the controlee device's preferred ranging parameters to the controller device. As an embodiment, the ARC payload IE and/or RCR payload IE may be transmitted through a response message corresponding to the RRM message or the poll message. For a description of RCR payload IE, the description of RCR IE in IEEE 802.15.4z may be referred to.

Referring to FIG. 14A, the RPC-REQ information element may include a target power level field 14010 and/or a current power level field 14020.

The target power level field 14010 may indicate the target power level to be used by the responder(s). For example, the target power level field 14010 may indicate the power level in dBm to be used by the responder. The target power level may be used by the responder device to transmit a response message. As an embodiment, the target power level may be determined by the initiator.

The current power level field 14020 may indicate the current power level. For example, the current power level field 14020 may indicate the power level in dBm currently used by the initiator. The current power level may be used by the initiator to transmit an initiation message.

Referring to FIG. 14B, the RPC-RESP information element may include an updated power level field 14030.

The updated power level field 14030 may indicate the power level (updated power level) used by the responder. For example, the updated power level field 14030 may indicate the power level in dBm currently used by the responder. The updated power level may be used by the responder device to transmit a response message.

As an embodiment, the responder may determine the power level to be used based on the RPC-REQ information element included in the initiation message. For example, the responder may determine the target power level indicated by the target power level field 14010 of the RPC-REQ information element as the transmission power level to be used and set the determined transmission power level as the value of the updated power level field 14030 of the RPC-RESP information element.

As such, in the embodiment of FIG. 14, unlike in the embodiment of FIG. 13, the initiator may directly provide the target power level to be used by the responder in dBm, and the responder may use the target power level to transmit a response message.

<Third embodiment of RPC-REQ information element and RPC-RESP information element>

The third embodiment of the RPC-REQ information element and the RPC-RESP information element corresponds to an embodiment of expressing transmission power as a relative value (e.g., in %).

FIGS. 15A and 15B illustrate an RPC-REQ information element and an RPC-RESP information element according to another embodiment of the disclosure.

FIG. 15A illustrates an example of the RPC-REQ information element, and FIG. 15B illustrates an example of the RPC-RESP information element.

The RPC-REQ information element may be an IE (e.g., payload IE) used by the initiator to transmit information (RPC-related information) for ranging power control to the responder(s). As an embodiment, the RPC-REQ information element may be configured for each responder participating in ranging, or one RPC-REQ information element may be configured for responders participating in ranging.

In an embodiment, the RPC-REQ information element may be included in the initiator's initiation message and transmitted to the responder. For example, the RPC-REQ information element may be included as payload IE in the RIM message. As another example, the RPC-REQ information element may be included as payload IE in the poll message.

As an embodiment, when the initiator also serves as the controller, the RPC-REQ information element may be included in the advanced ranging control (ARC) payload IE. Here, the ARC payload IE (ARC IE) may be a payload IE used by the controller to transmit ranging configuration information to the controlee. As an embodiment, the ARC payload IE may be transmitted through a control message (e.g., RCM message), RIM message, or the poll message. For a description of ARC payload IE, the description of ARC IE in IEEE 802.15.4z may be referred to.

The RPC-RESP information element may be an IE (e.g., payload IE) used by the responder to respond to the RPC-REQ information element received from the initiator.

As an embodiment, the RPC-RESP information element may be included in the responder's response message and transmitted to the initiator device. For example, the RPC-RESP information element may be included as payload IE in the RRM message corresponding to the RIM message. As another example, the RPC-RESP information element may be included as payload IE in the response message corresponding to the poll message.

As an embodiment, when the initiator device also serves as the controller, the RPC-RESP information element may be transmitted along with the ranging changing request (RCR) payload IE. For example, when the initiator device also serves as the controller device, the RPC-RESP information element may be transmitted, along with the RCR payload IE, while being included in the ACR payload IE, or as a separate payload IE.

Here, the RCR payload IE (RCR IE) may be a payload IE used by the controlee device to request the controller device to change the current ranging configuration information. Meanwhile, the ARC payload IE (ARC IE) may be used by the controlee device along with the RCR payload IE (RCR IE) to transmit the controlee device's preferred ranging parameters to the controller device. As an embodiment, the ARC payload IE and/or RCR payload IE may be transmitted through a response message corresponding to the RRM message or the poll message. For a description of RCR payload IE, the description of RCR IE in IEEE 802.15.4z may be referred to.

In an embodiment, the RPC-REQ information element may be included in the initiator device's initiation message and transmitted to the responder device. For example, the RPC-REQ information element may be included as a separate payload IE in the RIM message. As another example, the RPC-REQ information element may be included as a separate payload IE in the poll message.

As another example, when the initiator device also serves as the controller, the RPC-REQ information element may be included in the advanced ranging control (ARC) payload IE. As an embodiment, the ARC payload IE may be included in one of a control message, a RIM message, or a poll message and transmitted.

As another example, when the initiator device also serves as the controller, the RPC-REQ information element may be included in the ranging changing request (RCR) payload IE or may be transmitted together with the RCR payload IE. As an embodiment, the RCR payload IE may be included in one of a control message, a RIM message, a poll message, or a termination message and transmitted.

As an embodiment, the RPC-RESP information element may be included in the responder device's response message and transmitted to the initiator device. For example, the RPC-RESP information element may be included as payload IE in the RRM message corresponding to the RIM message. As another example, the RPC-RESP information element may be included as payload IE in the response message corresponding to the poll message.

Referring to FIG. 15A, the RPC-REQ information element may include a target power level field 15010 and/or a current power level field 15020.

The target power level field 15010 may indicate the target power level to be used by the responder(s). For example, the target power level field 15010 may indicate the power level in % to be used by the responder. The target power level may be used by the responder to transmit a response message. As an embodiment, the target power level may be determined by the initiator.

The current power level field 15020 may indicate the current power level. For example, the current power level field 15020 may indicate the power level in % currently used by the initiator. The current power level may be used by the initiator to transmit an initiation message.

Referring to FIG. 15B, the RPC-RESP information element may include an updated power level field 15020.

The updated power level field 15020 may indicate the power level (updated power level) used by the responder. For example, the updated power level field 15020 may indicate the power level in % currently used by the responder. The updated power level may be used by the responder to transmit a response message.

As an embodiment, the responder may determine the power level to be used based on the RPC-REQ information element included in the initiation message. For example, the responder may determine the target power level indicated by the target power level field 15010 of the RPC-REQ information element as the transmission power level to be used and set the determined transmission power level as the value of the updated power level field 15030 of the RPC-RESP information element.

As such, in the embodiment of FIG. 15, unlike in the embodiment of FIG. 13, the initiator may directly provide the target power level to be used by the responder in %, and the responder device may use the target power level to transmit a response message.

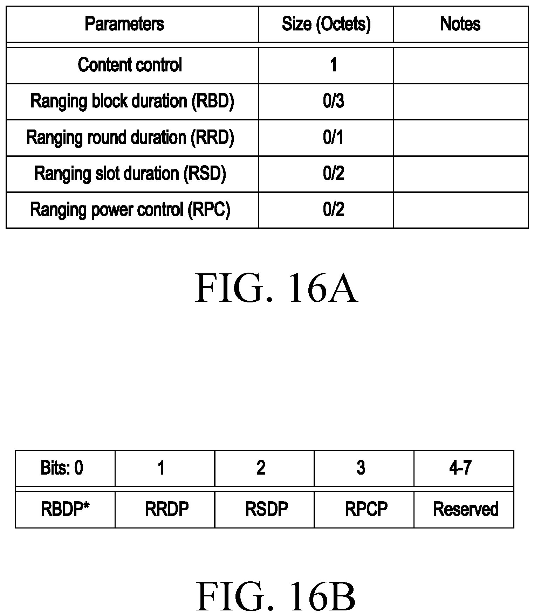

FIGS. 16A and 16B illustrate a UWB message including RPC-related information according to an embodiment of the disclosure.

FIG. 16A illustrates an example of a UWB message including RPC-related information, and FIG. 16B illustrates an example of a content control field Content control included in the UWB message of FIG. 16A.

In the embodiment of FIGS. 16A/B, the UWB message may be included in a ranging message used for TWR (TWR message) or a ranging message used for DL-TDoA (DL-TDoA message (DTM)). As an embodiment, the TWR message may be an RIM message or an RRM message. As an embodiment, the DL-TDoA message may be a Poll message (Poll DTM) or a Response message (Response DTM).

Referring to FIG. 16A, the UWB message may include a content control field (Content control), a ranging block duration (RBD) field, a ranging round duration (RRD) field, a ranging slot duration (RSD) field, and/or a ranging power control (RPC) field. As an embodiment, the fields of FIG. 16A may be included in the payload IE (e.g., payload IE for UWB message defined in IEEE) of the UWB message. For example, the fields of FIG. 16A may be included in the ARC payload IE (ARC IE) of the UWB message or a separately defined payload IE.

The content control field may provide control information about at least one field included in the UWB message (or the payload IE of the UWB message). As in FIG. 16B, the content control field may include a ranging block duration present (RBDP) field, a ranging round duration present (RRDP) field, a ranging slot duration present (RSDP) field, and/or a ranging power control present (RPCP) field.

The RBDP field may indicate whether the RBD field is present. For example, the RBDP field may be set to a first value indicating the presence of the RBD field or a second value indicating the absence of the RBD field.

The RRDP field may indicate whether the RRD field is present. For example, the RRDP field may be set to a first value indicating the presence of the RRD field or a second value indicating the absence of the RRD field.

The RSDP field may indicate whether the RSD field is present. For example, the RSDP field may be set to a first value indicating the presence of the RSD field or a second value indicating the absence of the RSD field.

The RPCP field may indicate whether the RPC field is present. For example, the RPCP field may be set to a first value indicating the presence of the RPC field or a second value indicating the absence of the RPC field.

The RBD field may include information about the duration of the ranging block.

The RRD field may include information about the duration of the ranging round. For example, the RRD field may indicate the number of ranging slots within the ranging round.

The RSD field may include information about the duration of the ranging slot.

The RPC field may include RPC-related information.

In an embodiment, when the UWB message is included in the initiation message (e.g., RIM message or Poll message) of the initiator, the RPC field may include an RPC-REQ information element. As an embodiment, the RPC-REQ information element may be one of the RPC-REQ information elements of FIG. 13A, 14A, or 15A.

In another embodiment, when the UWB message is included in the response message (e.g., RRM message corresponding to RIM or response message corresponding to poll message) of the responder, the RPC field may include an RPC-RESP information element. As an embodiment, the RPC-RESP information element may be one of the RPC-RESP information elements of FIG. 13B, 14B, or 15B.

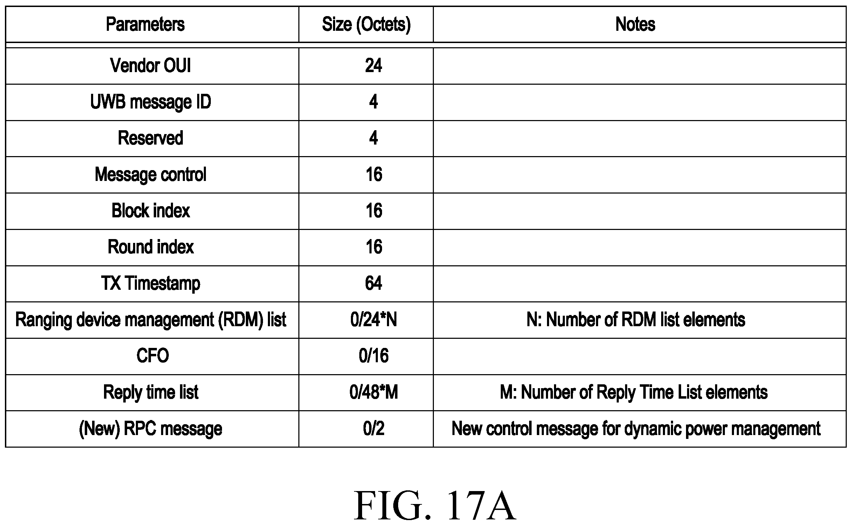

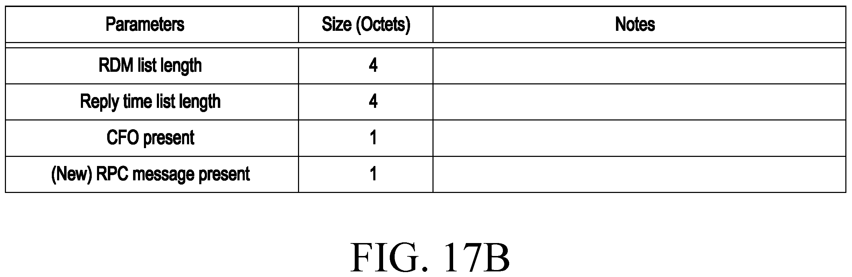

FIG. 17A illustrates a UWB message including RPC-related information according to another embodiment of FIG. 17A. FIG. 17B illustrates a message control field included in the UWB message of FIG. 17A.

In the embodiment of FIGS. 17A and 17B, the UWB message may be included in a ranging message (DL-TDoA message (DTM)) (e.g., DTM defined in FiRa Consortium) used for DL-TDoA. As an embodiment, the DL-TDoA message may be a Poll message (Poll DTM) or a Response message (Response DTM).

Referring to FIG. 17A, the UWB message may include a vendor OUI field (Vendor OUI), a UWB message ID field (UWB Message ID), a message control field (Message Control), a block index field (Block Index), a round index field (Round Index), a transmission timestamp field (Tx Timestamp), a ranging device management list field (Ranging Device Management List), a CFO field (Clock Frequency Offset), a reply time list field (Reply Time list), and/or an RPC message field. As an embodiment, the fields of FIG. 17A may be included in the payload IE of the UWB message. For example, the fields of FIG. 17A may be included in the content field of the payload IE of the DL-TDoA message.

Each field is described below.

- Vendor OUI: Vendor OUI is, e.g., a field including a unique value of the vendor defining a message to ensure the uniqueness of the defined messages based on the IEEE standard. For example, in the case of the payload IE defined in FiRa consortium, the Vendor OUI field may include a value of 0x5A18FF.
- UWB message ID: UWB message ID may be a field indicating which message the corresponding message (or the payload IE of the corresponding message) is. In the embodiment of FIG. 17A, the UWB message ID may be set to a first value indicating the poll DTM or a second value indicating the response DTM.
- Message control: The message control field is a field including information about the presence or absence of various parameters included in the corresponding message (or the payload IE of the corresponding message) and, in the case of parameters expressed in a list form, the number of elements included in the list or the length of the parameter.

Referring to FIG. 17B, the message control field may include an RDM list length field, a Reply time list length field, a CFO present field, and/or an RPC message present field.

The RDM List length field may include information about the number/length of elements included in the RDM list field.

The Reply time list length field may include information about the number/length of elements included in the Reply time list.

The CFO present field may indicate whether the CFO field is present. For example, the CFO presence field may be set to a first value indicating the presence of the CFO field or a second value indicating the absence of the CFO field.

The RPC message present field may indicate whether the RPC message field is present. For example, the RPC message present field may be set to a first value indicating the presence of the RPC message field or a second value indicating the absence of the RPC message field.

- Block index: The block index may indicate the index of the ranging block where the corresponding message is transmitted.

- Round index: The round index may indicate the index of the ranging round where the corresponding message is transmitted.
- Tx timestamp: The Tx timestamp field may include the timestamp of when the corresponding message is transmitted. As an embodiment, the Tx Timestamp may be used for operations related to downlink TDoA, such as synchronizing, correcting clock speed differences, and/or calculating TDoA.
- Ranging Device Management(RDM) List: The RDM List may be a parameter including scheduling information such as, e.g., in what ranging slot the response DT-anchor in the same cluster as the initiator DT-anchor should send the response message (Response DTM).
- CFO: The CFO may be a value indicating a speed difference between the clock of the response DT-anchor and the clock of the initiator DT-anchor. The corresponding value may be used for the DT-tag to calculate the precise TDoA.
- Reply time list: The reply time list is a parameter included in the final DTM and is a parameter including a list of reply times of the termination message (final DTM) to the response DTM. When the initiator DT-anchor receives a plurality of response DTMs, the respective reply times for the received response DTMs may be configured in the form of a list.
- RPC message: The RPC message field may include an RPC message which is a control message for dynamic power management. As an embodiment, the RPC message may include RPC-related information.

In an embodiment, when the UWB message is included in the initiation message (e.g., Poll message) of the initiator, the RPC field may include an RPC-REQ information element. As an embodiment, the RPC-REQ information element may be one of the RPC-REQ information elements of FIG. 13A, 14A, or 15A.

In another embodiment, when the UWB message is included in the response message (e.g., Response message corresponding to the Poll message) of the responder, the RPC field may include an RPC-RESP information element. As an embodiment, the RPC-RESP information element may be one of the RPC-RESP information elements of FIG. 13B, 14B, or 15B.

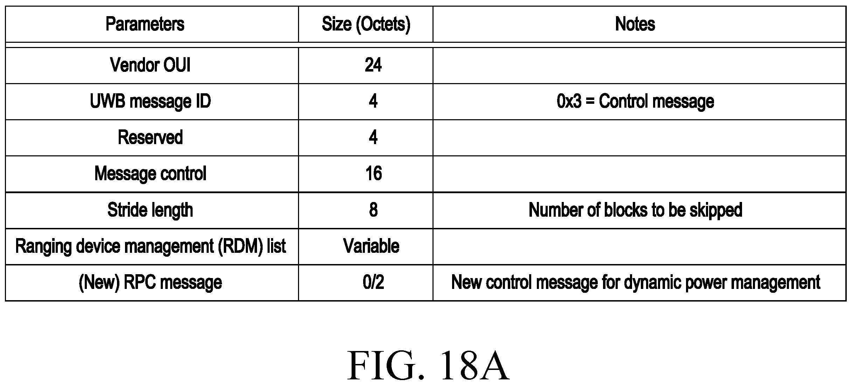

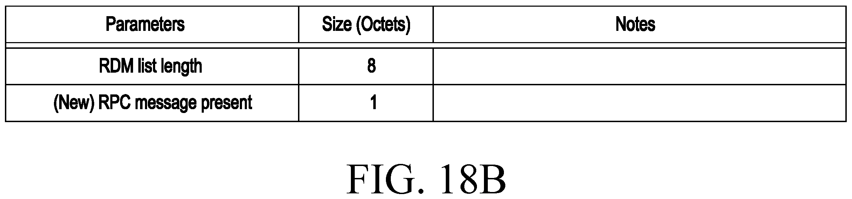

FIG. 18A illustrates a UWB message including RPC-related information according to another embodiment of the disclosure. FIG. 18B illustrates a message control field included in the UWB message of FIG. 18A.

In the embodiment of FIGS. 18A and 18B, the UWB message may be included in the initiation message used for TWR. As an embodiment, the initiation message may be an RIM message (e.g., RIM defined in FiRa Consortium).

Referring to FIG. 18A, the UWB message may include a vendor OUI field (Vendor OUI), a UWB message ID field (UWB Message ID), a message control field (Message Control), a stride length field (Stride length), a ranging device management list field (Ranging Device Management List), and/or an RPC message field. As an embodiment, the fields of FIG. 18A may be included in the payload IE of the UWB message. For example, the fields of FIG. 18A may be included in the content field of the payload IE of the RIM message.

Each field is described below.

- Vendor OUI: Vendor OUI is, e.g., a field including a unique value of the vendor defining a message to ensure the uniqueness of the defined messages based on the IEEE standard. For example, in the case of the payload IE defined in FiRa consortium, the Vendor OUI field may include a value of 0x5A18FF.
- UWB message ID: UWB message ID may be a field indicating which message the corresponding message (or the payload IE of the corresponding message) is. In the embodiment of FIG. 18, the UWB message ID field may be set to a value indicating a control message (e.g., 0x3). Alternatively, the UWB message ID field may be set to a value indicating an initiation message (e.g., RIM).
- Message control: The message control field is a field including information about the presence or absence of various parameters included in the corresponding message (or the payload IE of the corresponding message) and, in the case of parameters expressed in a list form, the number of elements included in the list or the length of the parameter.

Referring to FIG. 18B, the message control field may include an RDM list length field and/or an RPC message present field.

The RDM List length field may include information about the number/length of elements included in the RDM list field.

The RPC message present field may indicate whether the RPC message field is present. For example, the RPC message present field may be set to a first value indicating the presence of the RPC message field or a second value indicating the absence of the RPC message field.

- Stride length: The Stride length field may indicate the number of ranging blocks to be skipped.
- Ranging Device Management(RDM) List: The RDM List may be a parameter including scheduling information such as, e.g., in what ranging slot each of the responders should send a response message (RRM message).
- RPC message: The RPC message field may include an RPC message which is a control message for dynamic power management. As an embodiment, the RPC message may include RPC-related information.

As an embodiment, the RPC message field of the RIM message may include an RPC-REQ information element. As an embodiment, the RPC-REQ information element may be one of the RPC-REQ information elements of FIG. 13A, 14A, or 15A.

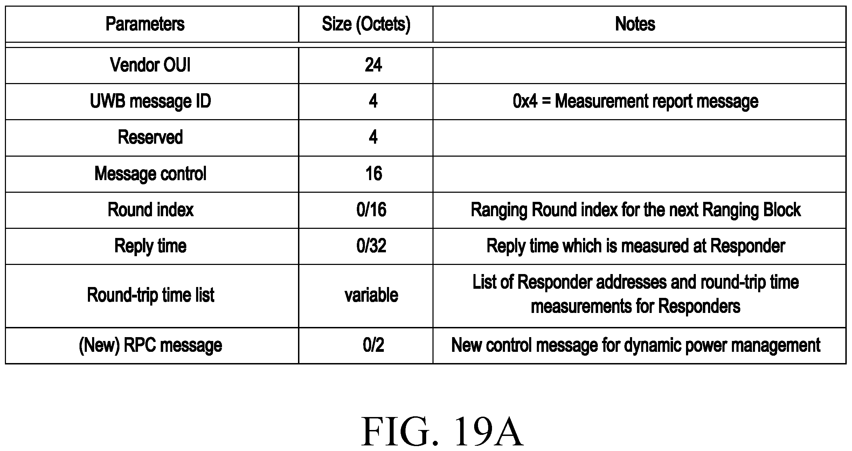

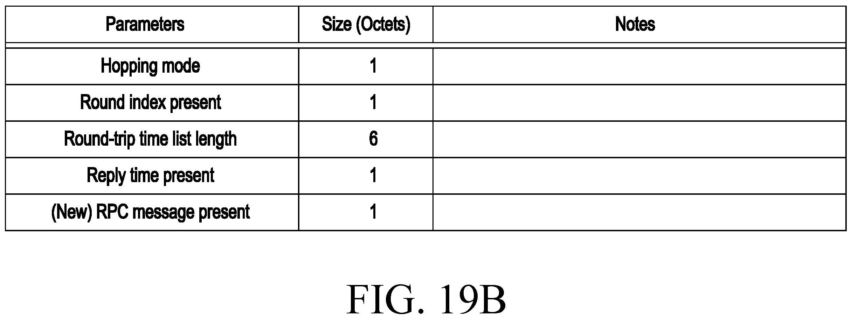

FIG. 19A illustrates a UWB message including RPC-related information according to another embodiment of FIG. 17A. FIG. 19B illustrates a message control field included in the UWB message of FIG. 19A.

In the embodiment of FIGS. 19A and 19B, the UWB message may be included in the response message used for TWR. As an embodiment, the response message may be an RRM message (e.g., RRM defined in FiRa Consortium).

Referring to FIG. 19A, the UWB message may include a vendor OUI field (Vendor OUI), a UWB message ID field (UWB Message ID), a message control field (Message Control), a round index field (Round index), a reply time field (Reply time), a round-trip time list field (Round-trip time list), and/or an RPC message field. As an embodiment, the fields of FIG. 19A may be included in the payload IE of the UWB message. For example, the fields of FIG. 19A may be included in the content field of the payload IE of the RRM message.

Each field is described below.

- Vendor OUI: Vendor OUI is, e.g., a field including a unique value of the vendor defining a message to ensure the uniqueness of the defined messages based on the IEEE standard. For example, in the case of the payload IE defined in FiRa consortium, the Vendor OUI field may include a value of 0x5A18FF.

- UWB message ID: UWB message ID may be a field indicating which message the corresponding message (or the payload IE of the corresponding message) is. In the embodiment of FIG. 19, the UWB message ID field may be set to a value indicating that the message is a measurement report message (e.g., 0x3). Alternatively, the UWB message ID field may be set to a value indicating a response message (e.g., RRM).

- Message control: The message control field is a field including information about the presence or absence of various parameters included in the corresponding message (or the payload IE of the corresponding message) and, in the case of parameters expressed in a list form, the number of elements included in the list or the length of the parameter.

Referring to FIG. 19B, the message control field may include a hopping mode field, a round index present field, a round-trip time list length field, a reply time present and/or RPC message present field.

The hopping mode field may designate a hop mode for the ranging block. For example, the hopping mode field may be set to a first value indicating that hopping (round hopping) is not used (no hopping) or a second value indicating that hopping is used.

The round index present field may indicate whether a round index field is present. For example, the round index present field may be set to a first value indicating that a round index field is present or a second value indicating whether a round index field is absent.

The round-trip time list length field may include information about the number/length of elements included in the round-trip time list field.

The reply time present field may indicate whether a reply time field is present. For example, the reply time present field may be set to a first value indicating the reply time field is present or a second value indicating that a reply time field is absent.

The RPC message present field may indicate whether the RPC message field is present. For example, the RPC message presence field may be set to a first value indicating the presence of the RPC message field or a second value indicating the absence of the RPC message field.

- Round index: The round index field may indicate the index of the ranging round for the ranging block next to the ranging block where the corresponding message is transmitted.

- Reply Time: The reply time field may include the reply time measured by the responder. As an embodiment, the reply time may be a time from the time when the RIM message is received to the time when the RRM message is transmitted.

- Round-trip time list: The round-trip time list field may include a list of round-trip time measurements for responder devices and addresses of responders.

- RPC message: The RPC message field may include an RPC message which is a control message for dynamic power management. As an embodiment, the RPC message may include RPC-related information.

As an embodiment, the RPC field of the RRM message may include an RPC-RESP information element. As an embodiment, the RPC-RESP information element may be one of the RPC-RESP information elements of FIG. 13B, 14B, or 15B.

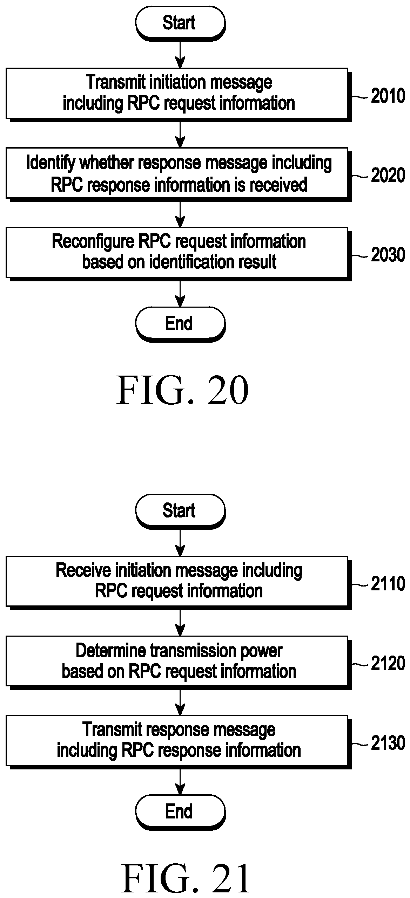

FIG. 20 is a flowchart illustrating a method by a first electronic device according to an embodiment of the disclosure;

In the embodiment of FIG. 20, the first electronic device may be a UWB device serving as an initiator, and the second electronic device may be a UWB device serving as a responder.

Referring to FIG. 20, the first electronic device may transmit an initiation message for initiating UWB ranging (2010). The initiation message may include ranging power control (RPC) request information (e.g., RPC-REQ IE) for dynamic power control for the UWB ranging.

The first electronic device may identify whether a response message corresponding to the initiation message is received from a second electronic device (2020). The response message may include ranging power control response information (e.g., RPC-RESP IE) corresponding to the ranging power control request information.

The first electronic device may reconfigure ranging power control request information based on a result of the identification (2030).

As an embodiment, the ranging power control request information may include at least one of a number of power levels field indicating a number of power levels, a first current power level field indicating a first current power level, or a first control field providing control information for adjusting a power level, and the ranging power control response information may include at least one of a second current power level field indicating a second current power level or a second control field providing information about a status of the second current power level. The description of the embodiment of FIG. 13 may be referred to for this.

As an embodiment, the ranging power control request information may include at least one of a target power level field indicating a target power level to be used by the second electronic device or a current power level field indicating a current power level. The ranging power control response information may include an updated power level field indicating an updated power level. As an embodiment, the target power level, the current power level, or the updated power level may be represented as an absolute value or relative value of the power level. The description of the embodiment of FIGS. 14 and 15 may be referred to for this.

As an embodiment, a UWB MAC frame associated with the initiation message or the response message may include a payload information element for controlling the UWB ranging. The payload information element may include a content control field including a ranging power control present field indicating whether a ranging power control field is present. The ranging power control field may include the ranging power control request information or the ranging power control response information. The description of the embodiment of FIG. 16 may be referred to for this.

As an embodiment, a method for the UWB ranging may be a DL-TDoA method. A UWB MAC frame associated with the initiation message or the response message may include a payload information element used for the DL-TDoA. The payload information element may include a UWB message ID field identifying a corresponding message, and a message control field including a ranging power control message present field indicating whether a ranging power control message field is present. The ranging power control message field may include the ranging power control request information or the ranging power control response information. The description of the embodiment of FIG. 17 may be referred to for this.

As an embodiment, a method for the UWB ranging may be a TWR method. A UWB MAC frame associated with the initiation message may include a payload information element used for the TWR. The payload information element includes a UWB message ID field identifying a corresponding message, and a message control field including a ranging power control present field indicating whether a ranging power control message field is present. The ranging power control message field may include the ranging power control request information or the ranging power control response information. The description of the embodiment of FIG. 18 may be referred to for this.

As an embodiment, a method for the UWB ranging may be a TWR method. A UWB MAC frame associated with the response message may include a payload information element used for the TWR. The payload information element may include a UWB message ID field identifying a corresponding message, and a message control field including a reply time present field indicating whether a reply time field is present and a ranging power control message present field indicating whether a ranging power control message field is present. The reply time field may indicate a reply time measured by the second electronic device, and the ranging power control message field may include the ranging power control request information or the ranging power control response information. The description of the embodiment of FIG. 19 may be referred to for this.

As an embodiment, the reconfiguring may decrease transmission power if current transmission power is larger than minimum transmission power when it is identified that the response message is received and increase the transmission power if the current transmission power is smaller than the maximum transmission power when it is identified that the response message is received. The description of the embodiment of FIG. 11 may be referred to for this.

As an embodiment, the reconfiguring may reconfigure the ranging power control request information further using a current ranging result obtained based on the response message when it is identified that the response message is received. As an embodiment, the reconfiguring, when it is identified that the response message is received, may decrease transmission power if current transmission power is larger than minimum transmission power, and the current ranging result is larger than a previous ranging result, and increase the transmission power if the current transmission power is larger than the minimum transmission power, and the current ranging result is smaller than the previous ranging result. The description of the embodiment of FIG. 12 may be referred to for this.

FIG. 21 is a flowchart illustrating a method by a first electronic device according to an embodiment of the disclosure.

In the embodiment of FIG. 21, the first electronic device may be a UWB device serving as an initiator, and the second electronic device may be a UWB device serving as a responder.

Referring to FIG. 21, the second electronic device may receive an initiation message for initiating UWB ranging from the first UWB device (21010). The initiation message may include ranging power control request information for dynamic power control for the UWB ranging.

The second electronic device may determine transmission power based on the ranging power control request information included in the initiation message (21020). The description of FIG. 11B and FIGS. 13 to 15 may be referred to for this.

The second electronic device may transmit, to the first electronic device, a response message corresponding to the initiation message using the determined transmission power (21030). The response message may include ranging power control response information corresponding to the ranging power control request information.

As an embodiment, the ranging power control request information may include at least one of a power level number field indicating a number of power levels, a first current power level field indicating a first current power level, or a first control field providing control information for adjusting a power level, and the ranging power control response information may include at least one of a second current power level field indicating a second current power level or a second control field providing information about a status of the second current power level. The description of the embodiment of FIG. 13 may be referred to for this.

As an embodiment, the ranging power control request information may include at least one of a target power level field indicating a target power level to be used by the second electronic device or a current power level field indicating a current power level. The ranging power control response information may include an updated power level field indicating an updated power level. As an embodiment, the target power level, the current power level, or the updated power level may be represented as an absolute value or relative value of the power level. The description of the embodiment of FIGS. 14 and 15 may be referred to for this.

As an embodiment, a UWB MAC frame associated with the initiation message or the response message may include a payload information element for controlling the UWB ranging. The payload information element may include a content control field including a ranging power control present field indicating whether a ranging power control field is present. The ranging power control field may include the ranging power control request information or the ranging power control response information. The description of the embodiment of FIG. 16 may be referred to for this.

As an embodiment, a method for the UWB ranging may be a DL-TDoA method. A UWB MAC frame associated with the initiation message or the response message may include a payload information element used for the DL-TDoA. The payload information element may include a UWB message ID field identifying a corresponding message, and a message control field including a ranging power control message present field indicating whether a ranging power control message field is present. The ranging power control message field may include the ranging power control request information or the ranging power control response information. The description of the embodiment of FIG. 17 may be referred to for this.

As an embodiment, a method for the UWB ranging may be a TWR method. A UWB MAC frame associated with the initiation message may include a payload information element used for the TWR. The payload information element includes a UWB message ID field identifying a corresponding message, and a message control field including a ranging power control present field indicating whether a ranging power control message field is present. The ranging power control message field may include the ranging power control request information or the ranging power control response information. The description of the embodiment of FIG. 18 may be referred to for this.

As an embodiment, a method for the UWB ranging may be a TWR method. A UWB MAC frame associated with the response message may include a payload information element used for the TWR. The payload information element may include a UWB message ID field identifying a corresponding message, and a message control field including a reply time present field indicating whether a reply time field is present and a ranging power control message present field indicating whether a ranging power control message field is present. The reply time field may indicate a reply time measured by the second electronic device, and the ranging power control message field may include the ranging power control request information or the ranging power control response information. The description of the embodiment of FIG. 19 may be referred to for this.

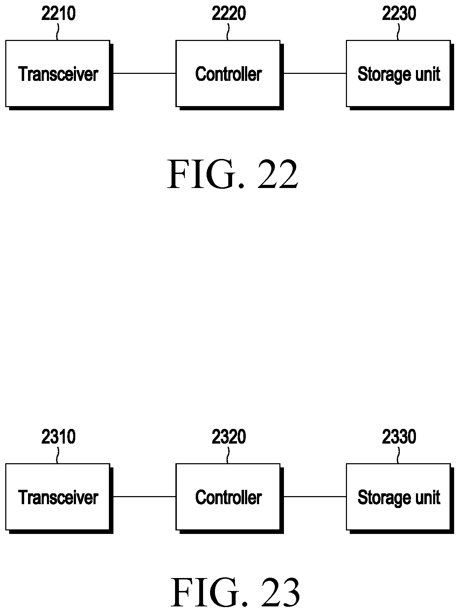

FIG. 22 is a block diagram illustrating a first electronic device according to an embodiment of the disclosure.

In the embodiment of FIG. 22, the first electronic device may be a UWB device serving as, e.g., an initiator.

Referring to FIG. 22, the first electronic device may include a transceiver 2210, a controller 2220, and a storage unit 2230. In the disclosure, the controller may be defined as a circuit or application-specific integrated circuit or at least one processor.

The transceiver 2210 may transmit and receive signals to/from another entity. The transceiver 2210 may transmit/receive data to/from another UWB device through, e.g., UWB communication or OOB communication (e.g., BLE communication).

The controller 2220 may control the overall operation of the electronic device according to an embodiment. For example, the controller 2220 may control inter-block signal flow to perform the operations according to the above-described flowchart. Specifically, the controller 2220 may control the operations for dynamic ranging power control of the first electronic device described above with reference to FIGS. 1 to 21.

The storage unit 2230 may store at least one of information transmitted/received via the transceiver 2210 and information generated via the controller 2220. For example, the storage unit 2230 may store information and data necessary for ranging power control for the methods described above with reference to FIGS. 1 to 21.

FIG. 23 is a block diagram illustrating a second electronic device according to an embodiment of the disclosure.

In the embodiment of FIG. 23, the second electronic device may be a UWB device serving as a responder.

Referring to FIG. 23, the second electronic device may include a transceiver 2310, a controller 2320, and a storage unit 2330. In the disclosure, the controller may be defined as a circuit or application-specific integrated circuit or at least one processor.

The transceiver 2310 may transmit and receive signals to/from another entity. The transceiver 2310 may transmit/receive data to/from another UWB device through, e.g., UWB communication or OOB communication (e.g., BLE communication).

The controller 2320 may control the overall operation of the electronic device according to an embodiment. For example, the controller 2320 may control inter-block signal flow to perform the operations according to the above-described flowchart. Specifically, the controller 2320 may control the operations for dynamic ranging power control of the second electronic device described above with reference to FIGS. 1 to 21.

The storage unit 2330 may store at least one of information transmitted/received via the transceiver 2310 and information generated via the controller 2320. For example, the storage unit 2330 may store information and data necessary for ranging power control for the methods described above with reference to FIGS. 1 to 21.

In the above-described specific embodiments, the components included in the disclosure are represented in singular or plural forms depending on specific embodiments proposed. However, the singular or plural forms are selected to be adequate for contexts suggested for ease of description, and the disclosure is not limited to singular or plural components. As used herein, the singular forms "a," "an," and "the" are intended to include the plural forms as well, unless the context clearly indicates otherwise.

Meanwhile, although specific embodiments of the present disclosure have been described above, various changes may be made thereto without departing from the scope of the present disclosure. Thus, the scope of the present invention should not be limited to the above-described embodiments, and should rather be defined by the following claims and equivalents thereof.

## Claims

1. A method by a first electronic device using ultra-wide band (UWB) communication, the method comprising:

   transmitting an initiation message for initiating UWB ranging; and
   identifying whether a response message corresponding to the initiation message is received from a second electronic device,
   wherein the initiation message includes ranging power control request information for dynamic power control for the UWB ranging, and the response message includes ranging power control response information corresponding to the ranging power control request information.

2. The method of claim 1, wherein the ranging power control request information includes at least one of a number of power levels field indicating a number of power levels, a first current power level field indicating a first current power level, or a first control field providing control information for adjusting a power level, and
   wherein the ranging power control response information includes at least one of a second current power level field indicating a second current power level or a second control field providing information about a status of the second current power level.

3. The method of claim 1, wherein the ranging power control request information includes at least one of a target power level field indicating a target power level to be used by the second electronic device or a current power level field indicating a current power level,

   wherein the ranging power control response information includes an updated power level field indicating an updated power level, and

wherein the target power level, the current power level, or the updated power level is represented as an absolute value or relative value of the power level.

4. The method of claim 1, wherein a UWB MAC frame associated with the initiation message or the response message includes a payload information element for controlling the UWB ranging,

   wherein the payload information element includes a content control field including a ranging power control present field indicating whether a ranging power control field is present, and
   wherein the ranging power control field includes the ranging power control request information or the ranging power control response information.

5. The method of claim 1, wherein a method for the UWB ranging is a downlink-time difference of arrival (DL-TDoA) method,

   wherein a UWB medium access control (MAC) frame associated with the initiation message or the response message includes a payload information element used for the DL-TDoA,
   wherein the payload information element includes a UWB message identifier (ID) field identifying a corresponding message, and a message control field including a ranging power control message present field indicating whether a ranging power control message field is present, and
   wherein the ranging power control message field includes the ranging power control request information or the ranging power control response information.

6. The method of claim 1, wherein a method for the UWB ranging is a two-way ranging (TWR) method,

   wherein a UWB medium access control (MAC) frame associated with the initiation message includes a payload information element used for the TWR,
   wherein the payload information element includes a UWB message identifier (ID) field identifying a corresponding message, and a message control field including a ranging power control presence field indicating whether a ranging power control message field is present, and
   wherein the ranging power control message field includes the ranging power control request information or the ranging power control response information.

7. The method of claim 1, wherein a method for the UWB ranging is a two-way ranging (TWR) method,

   wherein a UWB MAC frame associated with the response message includes a payload information element used for the TWR,
   wherein the payload information element includes a UWB message ID field identifying a corresponding message, and a message control field including a reply time present field indicating whether a reply time field is present and a ranging power control message present field indicating whether a ranging power control message field is present, and
   wherein the reply time field indicates a reply time measured by the second electronic device, and the ranging power control message field includes the ranging power control request information or the ranging power control response information.

8. The method of claim 1, further comprising:
   reconfiguring the ranging power control request information based on a result of the identification.

9. The method of claim 8, wherein reconfiguring comprises:

   decreasing transmission power, if current transmission power is larger than minimum transmission power in case that it is identified that the response message is received, and
   increasing the transmission power, if the current transmission power is smaller than the maximum transmission power in case that it is identified that the response message is received.

10. The method of claim 8, wherein reconfiguring comprises:
    reconfiguring the ranging power control request information further using a current ranging result obtained based on the response message, in case that it is identified that the response message is received.

11. The method of claim 10, wherein reconfiguring comprises in case that it is identified that the response message is received:

decreasing transmission power in case that current transmission power is larger than minimum transmission power, and the current ranging result is larger than a previous ranging result, and
increasing the transmission power if the current transmission power is larger than the minimum transmission power, and the current ranging result is smaller than the previous ranging result.

12. A method by a second ultra-wide band (UWB) device, the method comprising:

receiving, from a first UWB device, an initiation message for initiating UWB ranging , wherein the initiation message includes ranging power control request information for dynamic power control for the UWB ranging;
determining transmission power based on the ranging power control request information included in the initiation message; and
transmitting, to the first electronic device, a response message corresponding to the initiation message using the determined transmission power, wherein the response message includes ranging power control response information corresponding to the ranging power control request information.

13. The method of claim 12, wherein the ranging power control request information includes at least one of a power level number field indicating a number of power levels, a first current power level field indicating a first current power level, or a first control field providing control information for adjusting a power level, and
wherein the ranging power control response information includes at least one of a second current power level field indicating a second current power level or a second control field providing information about a status of the second current power level.

14. The method of claim 12, wherein the ranging power control request information includes at least one of a target power level field indicating a target power level to be used by the second electronic device or a current power level field indicating a current power level,

wherein the ranging power control response information includes an updated power level field indicating an updated power level, and
wherein the target power level, the current power level, or the updated power level is represented as an absolute value or relative value of the power level.

15. A first ultra-wide band (UWB) device using UWB communication, comprising:

a transceiver; and
at least one processor configured to:

transmit an initiation message for initiating UWB ranging; and
identify whether a response message corresponding to the initiation message is received from a second electronic device,
wherein the initiation message includes ranging power control request information for dynamic power control for the UWB ranging, and the response message includes ranging power control response information corresponding to the ranging power control request information.

100

UWB-enabled Application ~110

---------- Interface #1 ----------

UWB Framework ~120

---------- Interface #2 ----------

UWB Subsystem (UWBS) ~130

UWB MAC

UWB PHY

FIG. 1

**UWB-enabled Application(s)** ~ 210

~ 220

Framework API

**Secure Component** ~ 240

**Secure Service** ~ 223

**Profile Manager** ~ 221

**OOB Connectors** ~ 222

**OOB Component** ~ 250

Framework

**UWB Service** ~ 224

**UWBS** ~ 230

FIG. 2

301

First UWB device

302

Second
UWB device

Device search/session setup

310

Data communication

320

FIG. 3

| Octets: 2 | 0/1 | 0/2/6 | 0/1/2/6 | 0/1 | variable | variable | 2/4 |
|---|---|---|---|---|---|---|---|
| Frame Control | Sequence Number | Destination Address | Source Address | Auxiliary Security Header | Header IE (s) | Payload IE (s) | FCS |
| MAC header | | | | | | MAC payload | MAC footer |

FIG. 4

EP 4 421 526 A1

| MAC header (MHR) | MAC payload | MAC footer (MFR) |
|---|---|---|

| Synchronization header (SHR) | PHY header (PHR) | PHY payload (PSDU) |
|---|---|---|

## FIG. 5A

SP0

| SYNC | SFD | PHR | PHY payload |
|---|---|---|---|

SP1

| SYNC | SFD | STS | PHR | PHY payload |
|---|---|---|---|---|

SP2

| SYNC | SFD | PHR | PHY payload | STS |
|---|---|---|---|---|

SP3

| SYNC | SFD | STS |
|---|---|---|

Arrow shows RMARKER reference position, in each case

## FIG. 5B

Ranging block

| Ranging round 0 | Ranging round 1 | Ranging round 2 | Ranging round 3 | . . . . . | Ranging round N-1 |
|---|---|---|---|---|---|

| Ranging slot 0 | Ranging slot 1 | Ranging slot 2 | . . . . . | Ranging slot M-1 |
|---|---|---|---|---|

# FIG. 6

FIG. 7A

Legend:
- : Initiation Mesaage (IM)
- : Response Mesaage (RM)

SS-TWR : | RCM | IM | RM$_1$ | RM$_2$ | ⋯ | RM$_n$ | MR | RCUM |

RCP    RIP    RRP    MRP    RCUP

FIG. 7B

FIG. 8A

FIG. 8B

EP 4 421 526 A1

900-1 901 900-2 900-N

| DT-Anchor 1 (Initiator DT-Anchor) | DT-Tag | DT-Anchor 2 (Responder DT-Anchor) | ... | DT-Anchor N (Responder DT-Anchor) |

POLL DTM

RESPONSE DTM

RESPONSE DTM

FINAL DTM

location calculation ~ 940

## FIG. 9A

FIG. 9B

1001

First electronic device
(initiator)

1002

Second electronic device
(responder)

First initiation message

Power control request information (e.g., RPC-REQ IE)

~ 1010

Determine transmission
power based on power
control request information

~ 1020

Response message

Power control response information
(e.g., RPC-RESP IE)

~ 1030

Reconfigure power control
request information according
to preset criterion

~ 1040

Second initiation message

Reconfigured power control request information
(e.g., RPC-REQ IE)

~ 1050

FIG. 10

EP 4 421 526 A1

```
            ( Turn on UWB module )~ 11010a
                      │
                      ▼
        ┌──────────────────────────────┐
        │       Schedule ranging,       │
        │ allocate initial power value P_Init │ ~ 11020a
        │         P_t = P_Init          │
        └──────────────────────────────┘
                      │        11030a
                      ▼
        ┌──────────────────────────────┐ ◄────────────
        │     Initiator transmits       │ ◄────
        │      initiation message       │
        └──────────────────────────────┘
                      │
                      ▼
              ╱─────────────╲  11040a            ╱─────────────╲ 11050a          ┌──────────────────┐ 11070a
             ╱ RESP message  ╲     No           ╱               ╲     No         │ Maintain power level, │
            ╱ received before  ╲──────────────►╱  P_t < P_max    ╲──────────────►│  configure RPC-REQ   │
             ╲   timeout?     ╱               ╲               ╱                  └──────────────────┘
              ╲─────────────╱                  ╲─────────────╱                           ▲
                    │ Yes                             │ Yes
                    ▼                                 │
              ╱─────────────╲  11080a                 │
             ╱               ╲     No                 │
            ╱   P_t > P_0     ╲────────────────────────────────────►
             ╲               ╱                        │
              ╲─────────────╱                         │
                    │ Yes   11090a                    ▼   11060a
                    ▼                          ┌──────────────────┐
        ┌──────────────────────┐              │ Increase power level, │
        │  Decrease power level, │              │ configure RPC-REQ IE │
        │ configure RPC-REQ IE*  │              └──────────────────┘
        └──────────────────────┘
```

## FIG. 11A

Turn on UWB module — 11010b

Schedule ranging,
allocate initial power value $P_{Init}$
$Pt = P_{Init}$ — 11020b

Initiation message received? — 11030b — No

Yes

Apply power level included in
RPC-REQ IE in
initiation message — 11040b

Include RPC-RESP IE in
response message and transmit — 11050b

# FIG. 11B

FIG. 12

| Bits: 0-6 | 7-13 | 14-15 |
|---|---|---|
| Number of quantized power levels | Current power level | 0: Level down<br>1: Level up<br>2: Do not change<br>3: Reserved |
| 13010 | 13020 | 13030 |

## FIG. 13A

| Bits: 0-6 | 7 |
|---|---|
| Current power level | 0: Not changed<br>1: Changed |
| 13040 | 13050 |

## FIG. 13B

| Bits: 0-7 | 7-15 |
| --- | --- |
| Target power level (in dBm) | Current power level (in dBm) |

14010          14020

# FIG. 14A

| Bits: 0-7 |
| --- |
| Target power level (in dBm) |

14030

# FIG. 14B

| Bits: 0-6 | 7-13 | 14-15 |
|---|---|---|
| Target power ratio (in % unit) | Current power ratio (in % unit) | Reserved |

15010          15020

# FIG. 15A

| Bits: 0-6 | 7 |
|---|---|
| Updated power ratio (in % unit) | Reserved |

15030

# FIG. 15B

| Parameters | Size (Octets) | Notes |
|---|---|---|
| Content control | 1 | |
| Ranging block duration (RBD) | 0/3 | |
| Ranging round duration (RRD) | 0/1 | |
| Ranging slot duration (RSD) | 0/2 | |
| Ranging power control (RPC) | 0/2 | |

# FIG. 16A

| Bits: 0 | 1 | 2 | 3 | 4-7 |
|---|---|---|---|---|
| RBDP* | RRDP | RSDP | RPCP | Reserved |

# FIG. 16B

| Parameters | Size (Octets) | Notes |
|---|---|---|
| Vendor OUI | 24 | |
| UWB message ID | 4 | |
| Reserved | 4 | |
| Message control | 16 | |
| Block index | 16 | |
| Round index | 16 | |
| TX Timestamp | 64 | |
| Ranging device management (RDM) list | 0/24*N | N: Number of RDM list elements |
| CFO | 0/16 | |
| Reply time list | 0/48*M | M: Number of Reply Time List elements |
| (New) RPC message | 0/2 | New control message for dynamic power management |

# FIG. 17A

| Parameters | Size (Octets) | Notes |
|---|---|---|
| RDM list length | 4 | |
| Reply time list length | 4 | |
| CFO present | 1 | |
| (New) RPC message present | 1 | |

FIG. 17B

| Parameters | Size (Octets) | Notes |
|---|---|---|
| Vendor OUI | 24 | |
| UWB message ID | 4 | 0x3 = Control message |
| Reserved | 4 | |
| Message control | 16 | |
| Stride length | 8 | Number of blocks to be skipped |
| Ranging device management (RDM) list | Variable | |
| (New) RPC message | 0/2 | New control message for dynamic power management |

# FIG. 18A

EP 4 421 526 A1

EP 4 421 526 A1

| Parameters | Size (Octets) | Notes |
|---|---|---|
| RDM list length | 8 | |
| (New) RPC message present | 1 | |

FIG. 18B

| Parameters | Size (Octets) | Notes |
|---|---|---|
| Vendor OUI | 24 | |
| UWB message ID | 4 | 0x4 = Measurement report message |
| Reserved | 4 | |
| Message control | 16 | |
| Round index | 0/16 | Ranging Round index for the next Ranging Block |
| Reply time | 0/32 | Reply time which is measured at Responder |
| Round-trip time list | variable | List of Responder addresses and round-trip time measurements for Responders |
| (New) RPC message | 0/2 | New control message for dynamic power management |

FIG. 19A

| Parameters | Size (Octets) | Notes |
|---|---|---|
| Hopping mode | 1 | |
| Round index present | 1 | |
| Round-trip time list length | 6 | |
| Reply time present | 1 | |
| (New) RPC message present | 1 | |

# FIG. 19B

Start

Transmit initiation message
including RPC request information ─ 2010

Identify whether response message including
RPC response information is received ─ 2020

Reconfigure RPC request information
based on identification result ─ 2030

End

# FIG. 20

Start

Receive initiation message including
RPC request information ─ 2110

Determine transmission power
based on RPC request information ─ 2120

Transmit response message
including RPC response information ─ 2130

End

# FIG. 21

2210

Transceiver

2220

Controller

2230

Storage unit

# FIG. 22

2310

Transceiver

2320

Controller

2330

Storage unit

# FIG. 23

**INTERNATIONAL SEARCH REPORT**

| International application No. |
| --- |
| **PCT/KR2022/018492** |

**A.    CLASSIFICATION OF SUBJECT MATTER**

**G01S 13/76**(2006.01)i; **G01S 13/02**(2006.01)i; **G01S 7/40**(2006.01)i

According to International Patent Classification (IPC) or to both national classification and IPC

**B.    FIELDS SEARCHED**

Minimum documentation searched (classification system followed by classification symbols)

G01S 13/76(2006.01); H04B 1/717(2011.01); H04W 12/06(2009.01); H04W 12/63(2021.01); H04W 24/10(2009.01); H04W 4/06(2009.01); H04W 4/70(2018.01); H04W 52/18(2009.01); H04W 76/14(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: UWB 레인징(UWB ranging), 개시 메시지(initiation message), 응답 메시지(reply message), 전력 제어(power control), 페이로드(payload)

**C.    DOCUMENTS CONSIDERED TO BE RELEVANT**

| Category* | Citation of document, with indication, where appropriate, of the relevant passages | Relevant to claim No. |
| --- | --- | --- |
| A | KR 10-2021-0089641 A (SAMSUNG ELECTRONICS CO., LTD.) 16 July 2021 (2021-07-16)<br>See paragraphs [0098]-[0147], claim 1 and figures 3-14. | 1-15 |
| A | KR 10-2020-0137858 A (SAMSUNG ELECTRONICS CO., LTD.) 09 December 2020 (2020-12-09)<br>See paragraphs [0133]-[0142], claim 1 and figures 1-8. | 1-15 |
| A | KR 10-2020-0054114 A (APPLE INC.) 19 May 2020 (2020-05-19)<br>See claim 1 and figures 1-4. | 1-15 |
| A | KR 10-2021-0043642 A (APPLE INC.) 21 April 2021 (2021-04-21)<br>See claim 1 and figures 1-3. | 1-15 |
| A | KR 10-2013-0004911 A (LG ELECTRONICS INC.) 14 January 2013 (2013-01-14)<br>See claim 1 and figures 1-2. | 1-15 |

☐ Further documents are listed in the continuation of Box C.          ☑ See patent family annex.

| *    Special categories of cited documents: | "T"   later document published after the international filing date or priority date and not in conflict with the application but cited to understand the principle or theory underlying the invention |
| --- | --- |
| "A"   document defining the general state of the art which is not considered to be of particular relevance | |
| "D"   document cited by the applicant in the international application | "X"   document of particular relevance; the claimed invention cannot be considered novel or cannot be considered to involve an inventive step when the document is taken alone |
| "E"   earlier application or patent but published on or after the international filing date | |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
| --- | --- |
| **27 February 2023** | **02 March 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

### INTERNATIONAL SEARCH REPORT
**Information on patent family members**

| International application No. |
| --- |
| **PCT/KR2022/018492** |

| Patent document cited in search report | | | Publication date (day/month/year) | Patent family member(s) | | | Publication date (day/month/year) |
| --- | --- | --- | --- | --- | --- | --- | --- |
| KR | 10-2021-0089641 | A | 16 July 2021 | EP | 3841829 | A1 | 30 June 2021 |
| | | | | US | 11262445 | B2 | 01 March 2022 |
| | | | | US | 2020-0182996 | A1 | 11 June 2020 |
| | | | | WO | 2020-117012 | A1 | 11 June 2020 |
| KR | 10-2020-0137858 | A | 09 December 2020 | CN | 112020082 | A | 01 December 2020 |
| | | | | EP | 3745601 | A1 | 02 December 2020 |
| | | | | EP | 3745601 | B1 | 27 October 2021 |
| | | | | US | 11444655 | B2 | 13 September 2022 |
| | | | | US | 2020-0382158 | A1 | 03 December 2020 |
| | | | | WO | 2020-242002 | A1 | 03 December 2020 |
| KR | 10-2020-0054114 | A | 19 May 2020 | CN | 111182471 | A | 19 May 2020 |
| | | | | CN | 111182471 | B | 15 July 2022 |
| | | | | EP | 3651410 | A1 | 13 May 2020 |
| | | | | KR | 10-2022-0054780 | A | 03 May 2022 |
| | | | | KR | 10-2022-0129518 | A | 23 September 2022 |
| | | | | KR | 10-2444900 | B1 | 19 September 2022 |
| | | | | US | 11493621 | B2 | 08 November 2022 |
| | | | | US | 2020-0150261 | A1 | 14 May 2020 |
| KR | 10-2021-0043642 | A | 21 April 2021 | AU | 2019-346631 | A1 | 08 April 2021 |
| | | | | AU | 2019-346631 | B2 | 24 November 2022 |
| | | | | AU | 2021-204198 | A1 | 15 July 2021 |
| | | | | CN | 112673339 | A | 16 April 2021 |
| | | | | EP | 3834064 | A1 | 16 June 2021 |
| | | | | EP | 3910460 | A1 | 17 November 2021 |
| | | | | KR | 10-2021-0082549 | A | 05 July 2021 |
| | | | | US | 11019195 | B2 | 25 May 2021 |
| | | | | US | 2020-0106877 | A1 | 02 April 2020 |
| | | | | US | 2021-0006652 | A1 | 07 January 2021 |
| | | | | US | 2021-0258418 | A1 | 19 August 2021 |
| | | | | WO | 2020-069311 | A1 | 02 April 2020 |
| KR | 10-2013-0004911 | A | 14 January 2013 | WO | 2011-105808 | A2 | 01 September 2011 |
| | | | | WO | 2011-105808 | A3 | 12 January 2012 |

Form PCT/ISA/210 (patent family annex) (July 2022)